(19) Europäisches Patentamt / European Patent Office / Office européen des brevets

(11) **EP 4 474 616 B1**

(12) **EUROPEAN PATENT SPECIFICATION**

(45) Date of publication and mention of the grant of the patent:
**28.01.2026 Bulletin 2026/05**

(21) Application number: **24180900.3**

(22) Date of filing: **07.06.2024**

(51) International Patent Classification (IPC):
*F01D 5/02* (2006.01)   *F01D 21/00* (2006.01)
*F01D 25/04* (2006.01)   *G06N 3/006* (2023.01)
*G06N 3/045* (2023.01)   *G06N 3/08* (2023.01)
*G06N 3/084* (2023.01)   *F01D 5/10* (2006.01)
*F01D 5/16* (2006.01)   *F01D 5/26* (2006.01)
*F01D 25/06* (2006.01)   *G01M 1/30* (2006.01)

(52) Cooperative Patent Classification (CPC):
**F01D 5/027; F01D 5/10; F01D 5/16; F01D 5/26;
F01D 21/003; F01D 25/04; F01D 25/06;
G01M 1/30; G06N 3/006; G06N 3/045; G06N 3/092;**
F05D 2230/60; F05D 2260/81; F05D 2260/96;
F05D 2270/709;                        (Cont.)

(54) **A METHOD AND SYSTEM FOR OPTIMIZING THE ASSEMBLY OF ROTATING HARDWARE IN GAS TURBINE ENGINES USING ARTIFICIAL NEURAL NETWORKS**

VERFAHREN UND SYSTEM ZUR OPTIMIERUNG DER MONTAGE VON ROTIERENDER HARDWARE IN GASTURBINENMOTOREN UNTER VERWENDUNG KÜNSTLICHER NEURONALER NETZE

PROCÉDÉ ET SYSTÈME D'OPTIMISATION DE L'ASSEMBLAGE DE MATÉRIEL ROTATIF DANS DES MOTEURS À TURBINE À GAZ À L'AIDE DE RÉSEAUX NEURONAUX ARTIFICIELS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **07.06.2023   US 202318206882**

(43) Date of publication of application:
**11.12.2024   Bulletin 2024/50**

(73) Proprietor: **RTX Corporation
Farmington, CT 06032 (US)**

(72) Inventor: **DeLARM, Justin Roger
Farmington, 06032 (US)**

(74) Representative: **Dehns
10 Old Bailey
London EC4M 7NG (GB)**

(56) References cited:
DE-B4- 102010 063 812     US-A1- 2013 318 018
US-A1- 2021 102 465     US-B2- 10 343 784

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
G06N 3/048

## EP 4 474 616 B1

### Description

### BACKGROUND

This invention relates to a method and system for optimizing the assembly of rotating hardware in gas turbine engines using artificial neural networks (ANNs) to minimize the vibration in a given gas turbine engine.

Gas turbine engines are particularly susceptible to vibration due to the high rotational speeds of their rotating components. The inertial forces acting on rotating masses scale with the square of the angular velocity and are therefore able to magnify small imbalances in mass distribution around the axis of rotation to create large forces. These large mass-unbalance driven forces transmit through the bearings in an engine to the static structure causing a measurable cyclic deflection at a given location which tracks with the rotational speed of the rotor assembly. The velocity associated with the cyclic deflection is what is deemed vibration and is typically measured in inches per second (ips), or millimeters per second (mm/s).

The prior art approach to assembling rotating hardware to minimize vibration generally focuses on minimizing the unbalance in a given module being assembled before eventually correcting the module unbalance down to acceptable levels using balance correction weights. The unbalance present in a module assembly of rotating hardware can be reduced by taking advantage of the cyclic symmetry of the various rotors about their axial centerline and adjusting their angular positioning amongst each other in the module assembly. The angular adjustment of a particular rotor with respect to a given reference, such as another rotor in the module assembly of rotating parts which itself is not angularly adjusted, is deemed the clock angle of the rotor being adjusted.

It is known to minimize the unbalance present in a given module of rotating hardware (i.e., rotors) by strategically clocking the rotors based on variables influencing the unbalance of the final module assembly. Key geometric drivers of the resultant unbalance in a completed module assembly would be the concentricity or radial offset of various assembly interfaces of the individual rotors as well as the squareness or perpendicularity of the various assembly interfaces of the individual rotors. In addition to geometric drivers of unbalance, the individual rotors that are assembled together as part of a module have themselves their own unbalance originating from imperfect distribution of mass about their axial centerline. The manufacturer of a part generally measures the unbalance of the part, corrects the unbalance down to acceptable levels determined by blueprint requirements, and lastly records the final corrected unbalance which is deemed the residual unbalance, conventionally measured in ounce-inches (oz.-in.), or in g·mm.

While the prior art approach of minimizing vibration in a gas turbine engine by determining clock angles to minimize the unbalance present in a module of rotating hardware aligns with common sense, the aforementioned clock angles that are determined are not necessarily the optimal set of clock angles to minimize vibration. This is because, for a given amount of unbalance in a module, the distribution of that unbalance in the module influences the resultant vibration.

Depending on the distribution of unbalance in a module, different modal tendencies of the rotating assembly can be excited, and each modal tendency has its own critical speed in the RPM range where its occurrence and resultant vibration is amplified.

The prior art discloses the following:

US 10 343 784 B2 Method for balancing aircraft turbofan engines having dynamic unbalance characteristics to minimize vibrations, which method uses an artificial neural network and a global optimization algorithm. Both the artificial neural network and the global optimization algorithm may be implemented as computer code representing instructions to be executed.

US 2013/318018 A1 A neural network-based monitoring system for a turbine compressor.

DE 10 2010 063812 B4 Methods for balancing assemblies of rotary components and in particular, high speed rotor assemblies such as those in gas turbine engines.

US 2021/102465 A1 Device for balancing a shaft for a rotating machine, in particular for a turbocharger.

### SUMMARY

According to a first aspect of the invention, a method of optimizing the assembly of rotating hardware of a gas turbine engine to mitigate vibration includes obtaining for each of one or more modules of a gas turbine engine, a respective input data set indicative of one or more contributors to unbalance for one or more a plurality of stages of the module. The method includes, for each of the one or more modules, utilizing one or more first neural networks associated with the module to obtain, based on the respective input data set for the module, a set of optimized clock angles for arranging the stages of the module relative to each other to mitigate vibration of the gas turbine engine. Each of the one or more first neural networks has been trained with training data comprising the one or more contributors to unbalance, and one or more rotor dynamics models that use the training data and the set of clock angles from the one or more first neural networks to predict vibration at one or more locations of interest in the gas turbine engine.

3

In an embodiment of the foregoing, for each stage of the one or more modules, the one or more contributors to unbalance include at least one of a radial offset for at least one of the plurality of stages, a squareness error for at least one of the plurality of stages, or a residual unbalance due to an inherent mass offset for at least one of the plurality of stages.

In a further embodiment of any of the foregoing embodiments, the one or more modules includes a first module and a second module, and the method includes utilizing a second neural network to determine an optimized inter-module clock angle for arranging the second module relative to the first module to mitigate vibration of the gas turbine engine. The second neural network has also been trained with one of the one or more rotor dynamics models, which uses the training data, the sets of clock angles, and the inter-module clock angle to predict vibration at one or more locations of interest in the gas turbine engine.

In a further embodiment of any of the foregoing embodiments, the method includes assembling the first module of the gas turbine engine utilizing the set of optimized clock angles for the first module, assembling the second module of the gas turbine engine utilizing the set of optimized clock angles for the second module, and arranging the first module and second module relative to each other in the gas turbine engine utilizing the inter-module clock angle.

In a further embodiment of any of the foregoing embodiments, the method includes, for each of the one or more modules, utilizing the second neural network to determine at least one trim weight angle, and utilizing a third neural network to determine at least one trim weight magnitude. Arranging the first module and second module relative to each other includes adding one or more trim weights to the first module or second module that use one of the determined trim weight magnitudes and one of the determined trim weight angles. The third neural network has also been trained with one of the one or more rotor dynamics models, which uses the training data, the sets of clock angles, and the inter-module clock angle to predict vibration at one or more locations of interest in the gas turbine engine. The second and third neural networks have also been trained with the at least one trim weight angle and the at least one trim weight magnitude.

In a further embodiment of any of the foregoing embodiments, the method includes, for each of a plurality of training data sets, utilizing one of the one or more rotor dynamics models to perform at least one rotor dynamics model simulation for the training data set to determine one or more metrics related to vibration of the gas turbine engine, the one or more metrics including at least one of a predicted vibration or forces transmitted to a static structure of the gas turbine engine; and utilizing at least one reward function to calculate a reward for the training data set based on the one or more metrics. The method includes calculating a performance metric for the one or more first neural networks, second neural network, and third neural network using a performance function based on the rewards calculated for the training data sets; and utilizing an optimization algorithm to update weights of the one or more first neural networks, second neural network, and third neural network to improve the performance of the one or more first neural networks, second neural network, and third neural network as calculated by the performance function.

In a further embodiment of any of the foregoing embodiments, the one or more first neural networks include a neural network associated with the first module and a separate second neural network associated with the second module.

In a further embodiment of any of the foregoing embodiments, the one or more first neural networks include a neural network associated with both of the first module and the second module.

In a further embodiment of any of the foregoing embodiments, the first module is a high pressure compressor of the gas turbine engine, and the second module is a high pressure turbine of the gas turbine engine.

In a further embodiment of any of the foregoing embodiments, the first module is a low pressure compressor of the gas turbine engine, and the second module is a low pressure turbine of the gas turbine engine.

In a further embodiment of any of the foregoing embodiments, the method is performed where the first module is a high pressure compressor of the gas turbine engine the second module is a high pressure turbine of the gas turbine engine, and the method is separately performed where the first module is a low pressure compressor of the gas turbine engine and the second module is a low pressure turbine of the gas turbine engine.

According to another aspect of the invention, a system for optimizing the assembly of rotating hardware of a gas turbine engine to mitigate vibration includes processing circuitry operatively connected to memory. The processing circuitry is configured to obtain for each of one or more modules of a gas turbine engine, a respective input data set indicative of one or more contributors to unbalance of one or more a plurality of stages of the module; and for each of the one or more modules, utilize one or more first neural networks associated with the module to obtain, based on the respective input data set for the module, a set of optimized clock angles for arrangement of the stages of the module relative to each other to mitigate vibration of the gas turbine engine. Each of the one or more first neural networks has been trained with training data comprising the one or more contributors to unbalance, and one or more rotor dynamics models that use the training data and the set of clock angles from the one or more first neural networks to predict vibration at one or more locations of interest in the gas turbine engine.

In an embodiment of the foregoing, for each stage of the one or more modules, the one or more contributors to unbalance include at least one of a radial offset for at least one of the plurality of stages, a squareness error for at least one of the plurality of stages, or a residual unbalance due to an inherent mass offset for at least one of the plurality of stages.

In a further embodiment of any of the foregoing embodiments, the one or more modules includes a first module and a second module, and the processing circuitry is configured to utilize a second neural network to determine an optimized inter-module clock angle for arranging the second module relative to the first module to mitigate vibration of the gas turbine engine. The second neural network has also been trained with one of the one or more rotor dynamics models, which uses the training data, the sets of clock angles, and the inter-module clock angle to predict vibration at one or more locations of interest in the gas turbine engine.

In a further embodiment of any of the foregoing embodiments, the processing circuitry is configured to, for each of the one or more modules, utilize the second neural network to determine at least one trim weight angle, and utilize a third neural network to determine at least one trim weight magnitude corresponding to the at least one trim weight to be used during assembly of the gas turbine engine. The third neural network has also been trained with one of the one or more rotor dynamics models, which uses the training data, the sets of clock angles, and the inter-module clock angle to predict vibration at one or more locations of interest in the gas turbine engine. The second and third neural networks have also been trained with the at least one trim weight angle and the at least one trim weight magnitude.

In a further embodiment of any of the foregoing embodiments, the processing circuitry is configured to, for each of a plurality of training data sets, utilize one of the one or more rotor dynamics models to perform at least one rotor dynamics model simulation for the training data set to determine one or more metrics related to vibration of the gas turbine engine, the one or more metrics including at least one of a predicted vibration or forces transmitted to a static structure of the gas turbine engine, and utilize at least one reward function to calculate a reward for the training data set based on the one or more metrics. The processing circuitry is configured to calculate a performance metric for the one or more first neural networks, second neural network, and third neural network using a performance function based on the rewards calculated for the training data sets, and utilize an optimization algorithm to update weights of the one or more first neural networks, second neural network, and third neural network to improve the performance of the one or more first neural networks, second neural network, and third neural network as calculated by the performance function.

In a further embodiment of any of the foregoing embodiments, the one or more first neural networks include a neural network associated with the first module and a separate second neural network associated with the second module.

In a further embodiment of any of the foregoing embodiments, the one or more first neural networks include a neural network associated with both of the first module and the second module.

In a further embodiment of any of the foregoing embodiments, the first module is a high pressure compressor of the gas turbine engine, and the second module is a high pressure turbine of the gas turbine engine.

In a further embodiment of any of the foregoing embodiments, the first module is a low pressure compressor of the gas turbine engine, and the second module is a low pressure turbine of the gas turbine engine.

The aspects, embodiments, examples, and alternatives of the invention described in the preceding paragraphs, the claims, or the following description and drawings, including any of their various aspects or respective individual features, may be taken independently or in any combination. Features described in connection with one embodiment are applicable to all embodiments, unless such features are incompatible.

## BRIEF DESCRIPTION OF THE DRAWINGS

Figure 1 is a schematic view of an example gas turbine engine.
Figure 2 is a first schematic view of an example rotor.
Figure 3 is a second schematic view of the example rotor of Figure 2.
Figure 4 is an enlarged view of the rotor of Figure 3.
Figure 5 illustrates aspects of the example rotor of Figure 4.
Figure 6 illustrates an example squareness error of the rotor of Figure 5.
Figure 7 illustrates a plurality of example rotors assembled in series.
Figure 8 schematically illustrates an example impact of radial offset on mass distribution in sequential stages of rotating parts.
Figure 9 schematically illustrates an example impact of squareness errors on mass distribution in sequential stages of rotating parts.
Figure 10 schematically illustrates an example impact of residual unbalance on mass distribution in sequential stages of rotating parts.
Figure 11 is a schematic diagram of a typical Artificial Neuron used in an ANN.
Figure 12 is a schematic diagram of a typical ANN.
Figure 13 schematically illustrates an example first workflow and usage of an ANN to determine optimal clock angles to assemble the rotating hardware of a module of a gas turbine engine.
Figure 14 schematically illustrates an example second workflow that uses two ANNs, in addition to the ANNs used to determine clock angles for the rotors of modules under consideration, to determine an optimal clock angle, trim weight angle, and trim weight magnitude to assemble one module to another module.

Figure 15 schematically illustrates an example third workflow that uses three ANNs to determine optimal clock angles for rotors of two modules in addition to an optimal clock angle for one module to another, and determine a trim weight angle and trim weight magnitude to assemble one of the modules to another module.

Figure 16A and 16B schematically illustrate an example training process for training and updating the weights of the ANNs of Figures 13-15.

Figure 17 schematically illustrates a first training workflow that may be used in the training process of Figure 16A.

Figure 18 schematically illustrates a second training workflow that may be used in the training process of Figure 16A.

Figure 19 is a schematic view of an example system for optimizing the assembly of rotating hardware of a gas turbine engine

## DETAILED DESCRIPTION

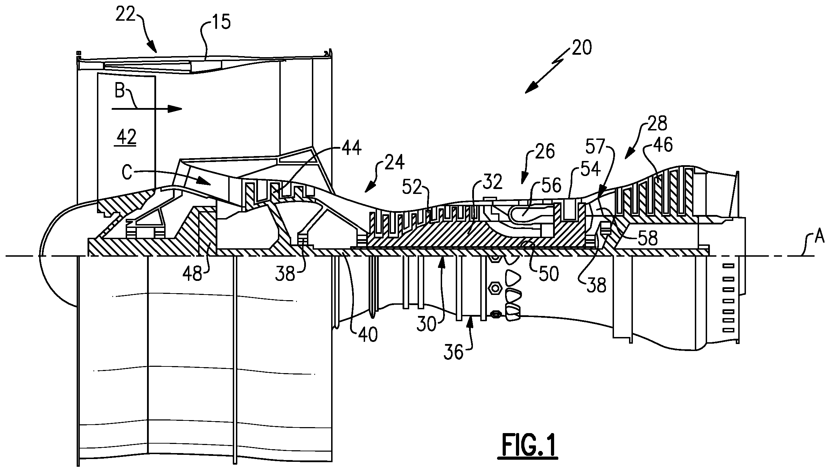

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures and/or open rotor architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor ("LPC") 44 and a first (or low) pressure turbine 46 ("LPT"). The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor ("HPC") 52 and the high pressure turbine ("HPT") 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis (or "centerline axis") A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes vanes 58 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of $[(Tram\ °R) / (518.7\ °R)]^{0.5}$. The "Low corrected fan tip speed" as disclosed herein according to one non-limiting embodiment is less than about 1150.0 ft / second (350.5 meters/second), and can be greater than or equal to 1000.0 ft / second (304.8 meters/second).

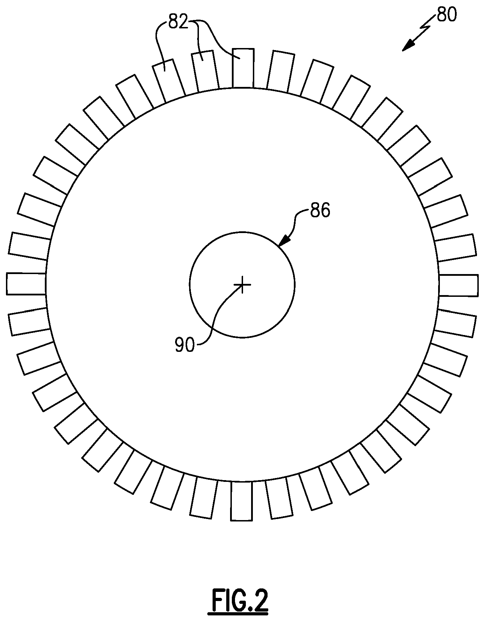

Figure 2 is a first schematic view of an example rotor 80, which may be part of a compressor or turbine stage for example, and which includes a plurality of airfoils 82 extending radially outward. The rotor 80 has a center of mass 90 proximate to a rotor bore inner diameter 86.

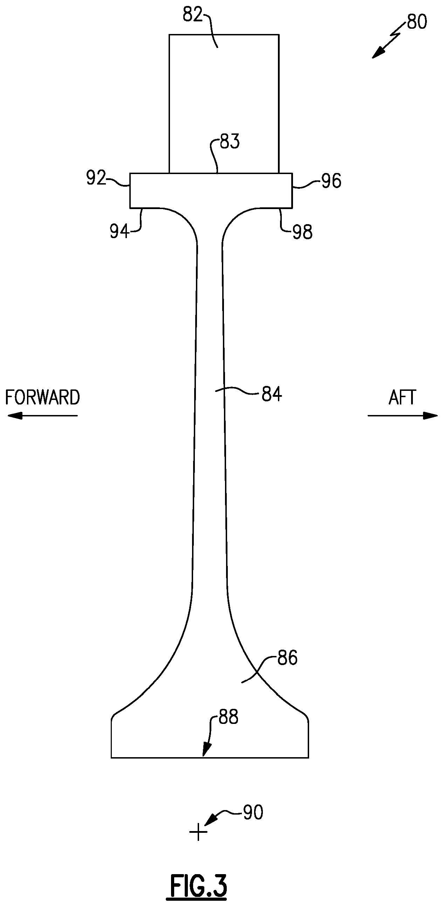

Figure 3 is a second schematic view of the example rotor 80. The rotor 80 includes an airfoil 82 that extends radially outward from a rim 83. A web 84 connects the rim 83 to a bore 86. The bore 86 has an inner diameter 88. The rotor 80 has a center of mass 90.

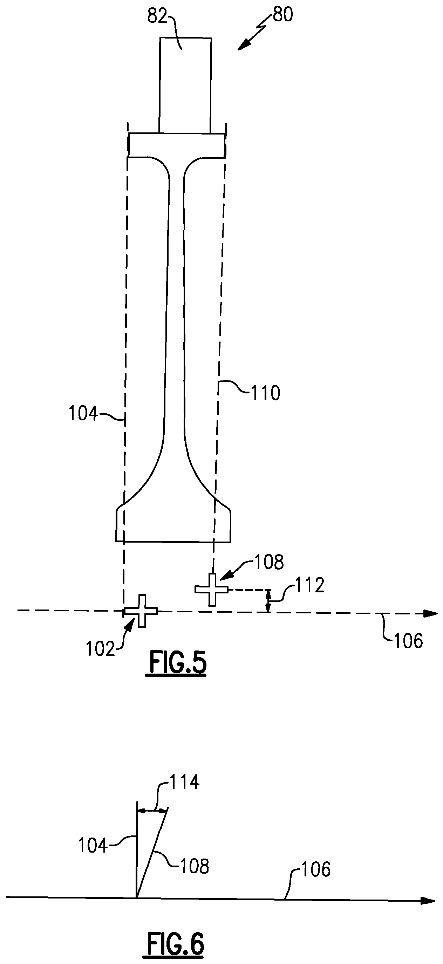

The rotor 80 has a forward axial assembly interface 92 and a forward assembly interface diameter surface 94 that have an associated forward datum plane 104 and datum axis 106 that will be discussed below in conjunction with Figure 5.

The rotor 80 also has an aft axial assembly interface 96 and an aft assembly interface diameter surface 98 that affect the position in space (center of mass and central axis, i.e., datum axis) of an aft component.

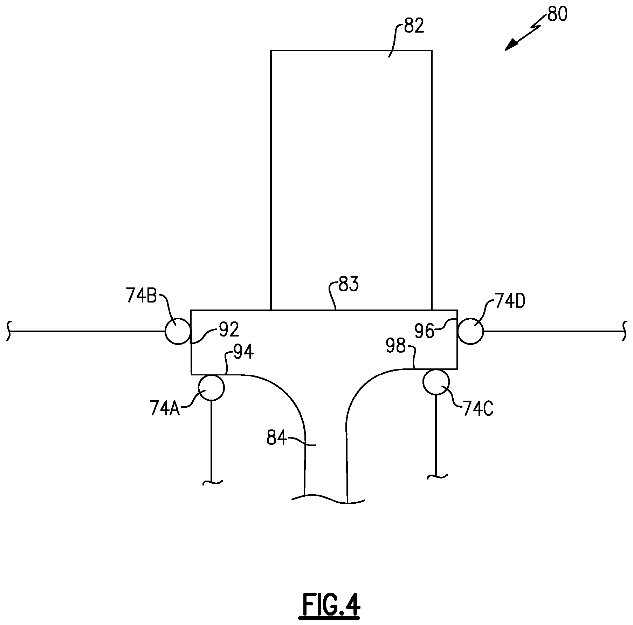

Figure 4 is an enlarged view of the rotor 80 of Figure 3. As shown in Figure 4, one or more measurement probes 74A-D are be used to take measurements related to the rotor 80. Measurement probe 74A abuts the forward assembly interface diameter surface 94, and the rotor 80 rotates relative to the measurement probe 74A as the measurement probe 74A measures points along the forward assembly interface diameter surface 94 of the rotor 80 for determining a forward datum diameter center point 102 that is centered about the measurements (see Fig. 5).

Measurement probe 74B abuts the forward axial assembly interface 92 and the rotor 80 rotates relative to the probe 74B as the probe 74B measures points along the forward axial assembly interface 92, which are fitted to establish a forward datum plane 104 (see Fig. 5).

Measurement probe 74C abuts the aft axial assembly interface diameter surface 98, and the rotor 80 rotates relative to the probe 74C as the measurement probe 74C measures points along the aft assembly interface diameter surface 98 for determining an aft center point 108 that is centered about the measurements (see Fig. 5).

Measurement probe 74D abuts the aft axial assembly interface 96, and the rotor 80 rotates relative to the probe 74D as the probe 74D measures points along the aft axial assembly interface 96, which are fitted to establish an aft plane 110 (see Fig. 5).

Figure 5 illustrates aspects of the rotor 80 of Figure 4, including the forward datum diameter center point 102, forward datum plane 104, aft center point 108, and aft plane 110. A datum axis 106 passes through the datum center point 102 and is perpendicular to the datum plane 104.

Due to the limits of manufacturing tolerances, it is not uncommon for the aft center point 108 be spaced apart from the datum axis 106, resulting in an offset 112 between the datum axis 106 and the center point 108, which is referred to as a "radial offset" herein.

Figure 6 illustrates an example squareness error of the rotor 80 of Figure 5. In Figure 6, the plane 104 is axially moved relative to the plane 108 until the planes intersect at a point on the datum axis 106. An axial distance 114 measurement is then taken at the radial distance of probe 74D in the direction parallel to the datum axis 106 to determine a squareness error which is equal to the axial distance 114. The radial offset and squareness error measurements have magnitudes and associated angles in the lateral plane (along the circumference) at which they act.

The squareness and radial offset of the rotor 80 affect the aft adjacent rotor's position in space, therefore affecting the position in space of the aft adjacent rotor, which influences unbalance and vibration. The unbalance of a given rotor 80 is further influenced by its residual unbalance, due to its distribution of mass, and which is typically measured before the part is supplied to be assembled.

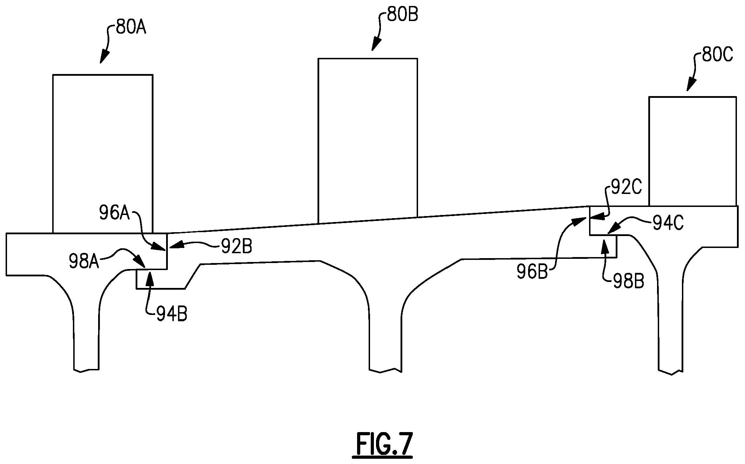

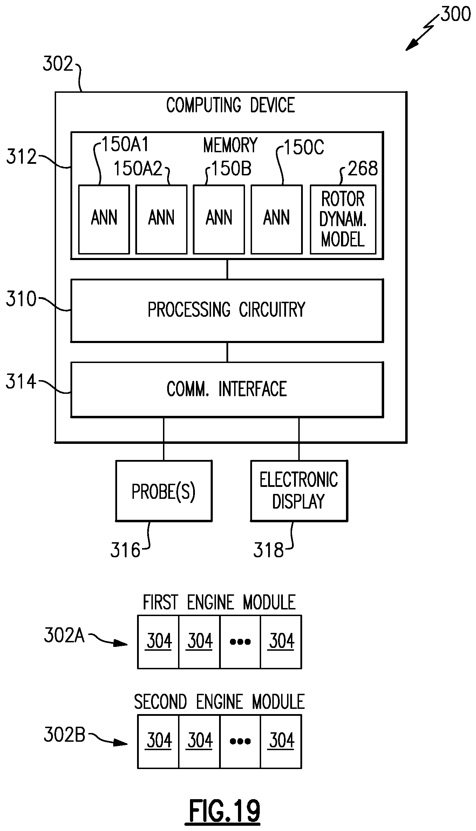

Figure 7 illustrates a plurality of example rotors 80A-C assembled in series. The rotors 80A-C may correspond to sequential stages 304 of the first module 302A or second module 302B in Figure 19, for example. Rotor 80B assembles to the aft assembly interface of rotor 80A (i.e., to the aft axial assembly interface 96A and assembly interface diameter surface 98A of the rotor 80A). In particular, forward axial assembly interface 92B of rotor 80B abuts aft axial assembly interface 96A of rotor 80A, and forward assembly interface diameter surface 94B of rotor 80B abuts assembly interface diameter surface 98A of rotor 80A.

Rotor 80C assembles to the aft assembly interface of rotor 80B (i.e., to the aft axial assembly interface 96B and assembly interface diameter surface 98B of the rotor 80B). In particular, forward axial assembly interface 92C of rotor 80C abuts aft axial assembly interface 96B of rotor 80B, and forward assembly interface diameter surface 94C of rotor 80C abuts assembly interface diameter surface 98B of rotor 80B.

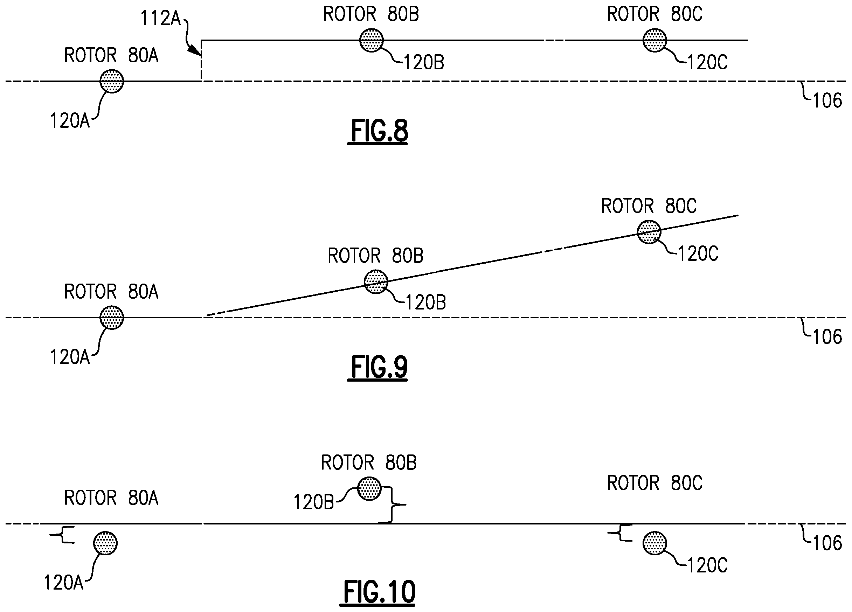

Thus, the aft assembly interface of rotor 80A, and its inherent geometric deviation (squareness and radial offset) controls the positioning in space of 80B and therefore controls the center of mass of rotor 80B. Since the aft assembly interface of 80B controls the positioning in space of rotor 80C, the positing in space of rotor 80C also depends on rotor 80A due to the dependence of rotor 80B on rotor 80A. This example goes to show how minor offsets and squareness errors can propagate (especially considering that rotors 80B-C may have their own radial offsets, squareness errors, and/or residual unbalances). These types of propagations are explored in Figures 8-10.

Figure 8 schematically illustrates an example impact of radial offset on mass distribution in sequential stages of rotating parts. In the example of Figure 8, the center of mass of rotor 80A is on the datum axis 106 of rotor 80A. Rotor 80A has a radial offset, and rotors 80B-C have no radial offset. Despite rotors 80B-C having no radial offset, the radial offset 112A of rotor 80A offsets the centers of mass 120B-C of the rotors 80B-C.

Figure 9 schematically illustrates an example impact of squareness errors on mass distribution in sequential stages of rotating parts. In the example of Figure 9, the center of mass 120A of rotor 80A is on the datum axis 106 of rotor 80A, but rotor 80A has a squareness error. Even though, rotors 80B-C do not have any squareness errors, as a result of the squareness error of rotor 80A, the centers of mass 120B and 120C are offset from the datum axis 106 of rotor 80A.

Figure 10 schematically illustrates an example impact of residual unbalance on mass distribution in sequential stages of rotating parts. In the example of Figure 10, rotors 80A-C have no radial offset and no squareness errors. However, the rotors 80A-C have residual unbalances due to their inherent distribution of mass, which results in their centers of mass 120A-C not being centered in-line with the datum axis 106 of rotor 80A.

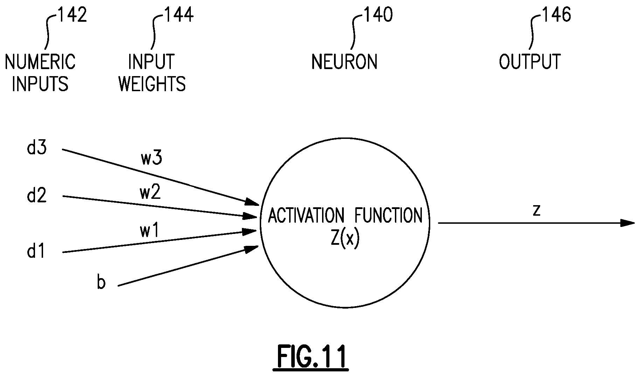

Figure 11 schematically shows an illustration of a typical Artificial Neuron 140 used in an ANN. The computational function of the Artificial Neuron 140 is generally modeled after the physical behavior of real neurons in the brain, hence the name. Artificial Neurons have numeric inputs 142 and input weights associated with those inputs (w1, w2, w3 in Figure 11). In addition to the inputs and their associated input weights there is generally always a bias 'b'. The weightings on the inputs and the bias 'b' are collectively referred to as the weights 144 of the Artificial Neuron 140. The output 146 of the Artificial Neuron 140 is determined by an activation function Z(x) of the Artificial Neuron 140. Two example activation functions are shown in equations 1-2 below.

$$z = Z(x) = x \qquad\qquad\qquad \text{equation 1}$$

$$z = Z(x) = \frac{1}{1 + e^{-x}} \qquad\qquad\qquad \text{equation 2}$$

where $x = (\Sigma w_i * d_i) + b$

b represents the bias of a given Artificial Neuron such as the Artificial Neuron 140;
w represents the input weightings a given Artificial Neuron such as the Artificial Neuron 140; and
d represents the numeric inputs a given Artificial Neuron such as the Artificial Neuron 140.

The activation function in equation 1 is a linear function, whereas the activation function in equation 2 is the non-linear Sigmoid function. The product of the inputs and the input weights are summed, and the bias is also added to determine the intermediate variable 'x' which the activation functions take as an input.

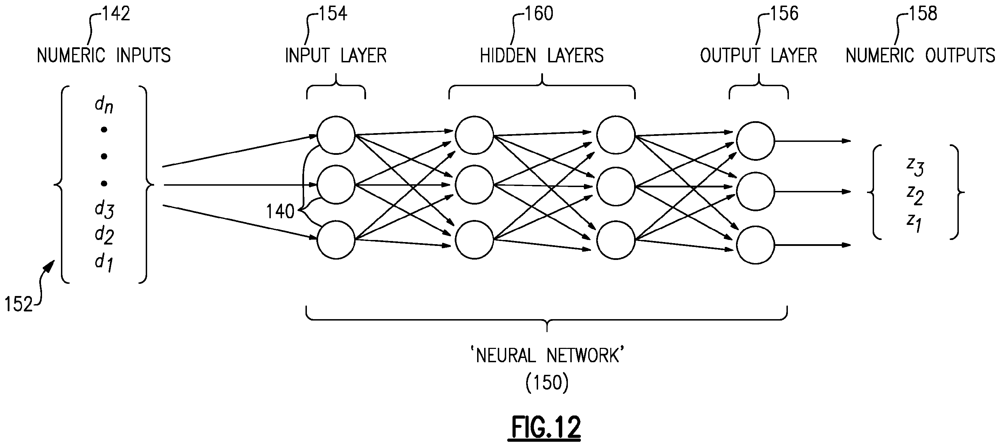

Figure 12 shows the general layout of an ANN 150. As the name implies, the ANN 150 is a network of the artificial neurons 140 shown in Figure 11 and described above. Each numeric input 142, collectively corresponding to an input data set 152, is passed to each Artificial Neuron 140 in the input layer 154. For simplicity, only one arrow is shown as an input to each Artificial Neuron 140 in the input layer 154, but it should be understood that each numeric input in the input data set 152 is passed as an input to each Artificial Neuron 140 in the input layer 154. After the input layer 154 there may be more layers. Generally, the last layer is referred to as the output layer 156 and the collection of its numeric outputs 158 are the outputs. The layers between the input layer and output layer are referred to as hidden layers 160. While three Artificial Neurons 140 are shown in each layer, the number of Artificial Neurons in each layer is flexible and can be modified as desired. Likewise, the number of layers and hidden layers can be modified as desired. As illustrated in Figure 12, the output of each Artificial Neuron 140 is passed as an input to each Artificial Neuron 140 in the next layer, which means the ANN 150 shown in Figure 12 is a fully connected neural network. In practice, a given ANN need not be fully connected, and some connections can be removed as necessary to reduce the size of the model. Also, the present invention is not limited to using fully connected ANNs.

As was the case for the Artificial Neuron 140 in Figure 11, each Artificial Neuron 140 in a general ANN 150 has weightings for the inputs, a bias, and an activation function which determines its output. The collection of all the weights (including the biases) for each Artificial Neuron 140 in the ANN 150 are collectively referred to as the weights W of the network. These weights and the choices of activation functions are determined during the training phase of the ANN 150.

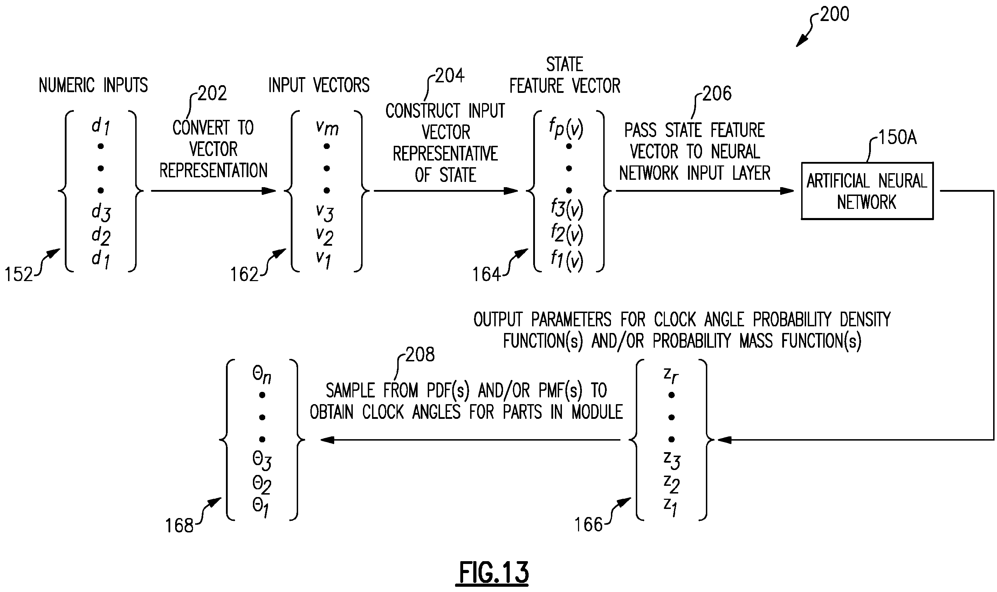

Figure 13 schematically illustrates an example first workflow 200 that uses an ANN 150A to determine the optimal clock angles for the rotors of a given module. The ANN 150A is unique to the type of module (e.g., LPC 44, LPT 46, HPC 52, or HPT 54). The first step in the workflow 200 is to determine the input data set 152 which is indicative of one or more contributors of unbalance for one or more of a plurality of stages of the module (e.g., all stages, or some but not all stages). The input data set 152 includes measured values from each rotor of the module being assembled, such as the squareness, radial offsets, and/or residual unbalances of each rotor or possible a subset of the rotors determined as necessary. These data are then converted to their vector representation 162 in 3D space as appropriate (step 202). For instance, a squareness amount may have a length equal to its magnitude but its direction in 3D space may be aligned with the direction in which it kinks the aft adjacent rotor's datum axis. The vector representation of radial offsets and residual unbalances may be constrained to the lateral directions (no axial component) with an appropriate magnitude and angular position. After constructing the vector representation of the data set compiled for the module (termed the input vectors), a State Feature Vector ("SFV") 164 may then be constructed (step 204) using any number of scalar valued functions which take as inputs any combination of the input vectors. Example functions could be dot products of two vectors, or dot products of two resultant cross products of any pairing of input vectors.

The SFV 164 provides a more general representation of the state to the ANN 150. The state is an abstract term which refers to the status of a system under consideration. In this case the state is the set of rotors, their measurements, and their clock angles which until otherwise determined are assumed to be zero degrees. Note that in reinforcement learning, it is considered that the neural networks take an action given a state which changes the state to a new state. In the case of workflow 200, the new state is the set of rotors, their measurements, and the newly determined clock angles.

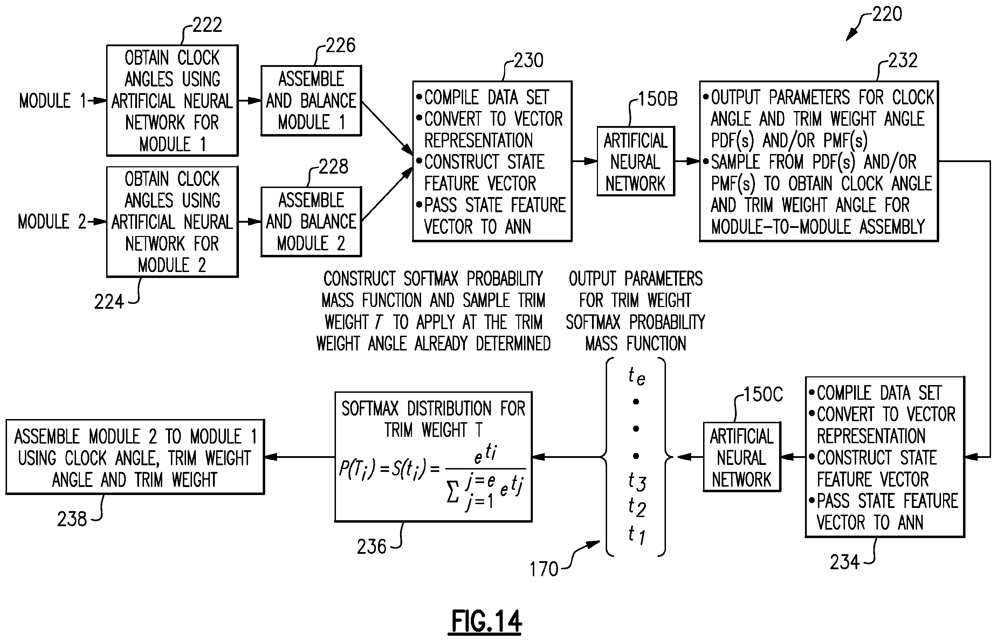

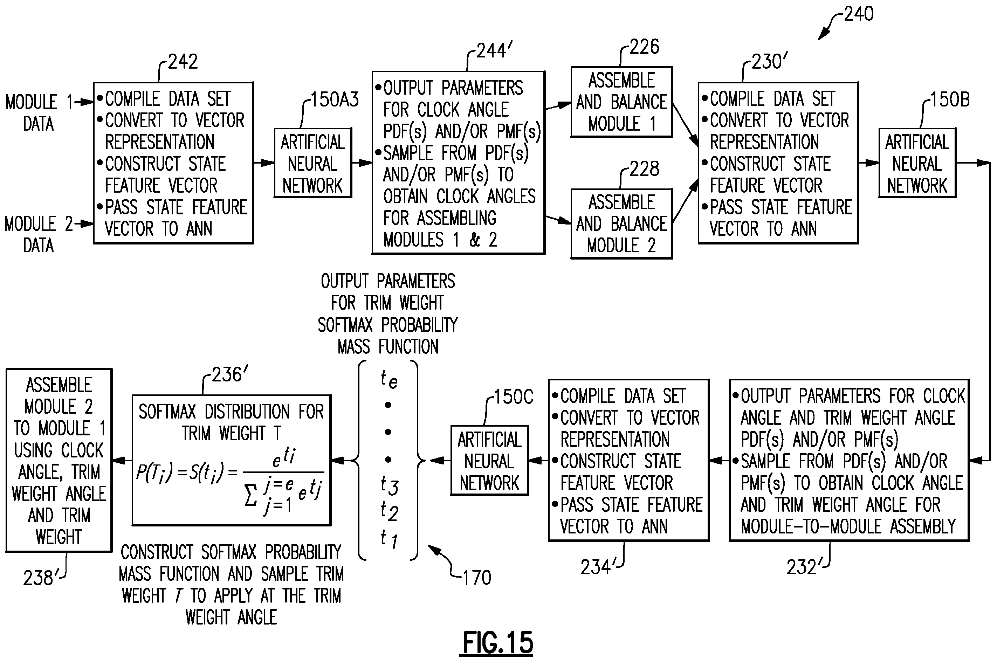

After the SFV 164 is calculated, the numerical values in the SFV 164 are each passed to the Artificial Neurons 140 of the input layer 154 of the ANN 150 (step 206). The ANN 150A computes numerical outputs which are parameters for a probability density function(s) and/or probability mass function(s). One such possible probability density function could be a wrapped multi-variate normal distribution which is parameterized by means, variances and co-variances (i.e., the covariance matrix). The option of using a probability mass function would facilitate the determination of optimal clock angles for a part with discrete clock angle allowances, such as parts with bolt holes or splines. Once the parameters 166 of the distributions have been determined, sampling from the distributions parameterized by the ANN 150 (step 208) outputs results in the determination of clock angles 168 for the module under consideration. Although ANN 150A is designated with numeral 150A in Figure 13, it is understood that separate modules 302A and 302B may have their own respective ANNs 150A1, 150A2 (as discussed in connection with Figure 14) or may have a shared ANN 150A3 (as discussed in connection with Figure 15).

Figure 14 schematically illustrates an example second workflow 220 which determines the optimal clock angle for assembling one module to another module. For a first module (e.g., LPC 44 or HPC 52) clock angles are obtained using a neural network 150A1 and the workflow 200 of Figure 13 (step 222). Similarly, for a second module (e.g., LPT 46 or HPT 54), clock angles are obtained using a neural network 150A2 and the workflow 200 of Figure 13 (step 224). In addition to determining the optimal clock angle for one module assembling to another, the workflow 220 also calculates the optimal angle to place a trim weight as well as the optimal amount of trim weight to apply. Trim weights are known weights applied at certain locations with the intention of correcting the balance of a module or in this case the balance of an assembly of two modules.

Once the two modules have individually been assembled and balanced according to industry standard balancing procedures (steps 226, 228), a new data set to be used is compiled (step 230). The data set can include but is not limited to squareness errors, radial offsets, residual unbalances and the clock angles of the parts in the two modules under consideration. Additional measurements for the modules which can be included in the data set are module squareness errors (squareness errors measured at assembly interfaces of the two modules), module radial offsets and module residual unbalances. Once the data set is compiled, as was the case with workflow 200, the data set is converted to appropriate vector representation and various scalar valued vector functions are used to construct a SFV to be passed to the ANN 150B. These steps are also collectively shown as step 230 in Figure 14.

The outputs from the ANN 150B in workflow 220 are the parameters for the probability density function(s) and/or probability mass function(s) for the module clock angle and trim weight angle. Using the parameters and the corresponding density function, a module clock angle and a trim weight angle is determined via sampling from the distribution(s) (step 232). At this point another data set is compiled using all the pertinent data collected thus far (e.g., the data used in the prior step) as well as the newly determined module clock angle and trim weight angle (step 234). This data set is also converted into an appropriate vector representation and a new SFV is constructed using any number of scalar valued vector functions (also shown as step 234). The numeric scalar elements in the SVF are each passed as inputs to the ANN 150C to determine the parameters 170 for the trim weight probability mass function ("PMF") (also shown as step 234). Since the trim weight is inherently discrete, a PMF (e.g., a Softmax probability mass function) is used according to the formula shown. Using the Softmax PMF, a trim weight to be used is determined via sampling from the PMF (step 236). Finally, using the determined module clock angle, trim weight angle and trim weight, the trim weight is applied at the determined angle to one of the first module or the second module, and the two modules are assembled together (step 238). Although trim weights are discussed in connection with Figure 14 and 15, it is understood that their incorporation in the workflows 220 and 240 is optional.

Figure 15 schematically illustrates an example third workflow 240 that is similar in spirit to workflow 220 of Figure 14 except the clock angles for the rotors of module 1 and module 2 are determined at the same time using a single ANN 150A3. A data set is first compiled (step 242) that includes radial offsets, squareness errors and residual unbalances pertaining to the rotors of both module 1 and module 2. From that, the appropriate vector representation is constructed and the numeric scalars in the SFV are calculated using any number of scalar valued vector functions as in previous workflows (also shown as step 242). The SVF is passed to ANN 150A3 to determine parameters for PDF(s) and/or PMF(s) pertaining to the rotor clock angles (also shown as step 242). The rotor clock angles for module 1 and module 2 are determined (step 244) via sampling of the PDF(s) or PMF(s) using the parameters determined by the first ANN. At this point module 1 and module 2 are assembled using the clock angles determined and are each balanced according to industry standard balance procedures (step 226, 228). From this point on the remaining steps 230', 232', 234', 236', and 238' of workflow 240 are similar to corresponding steps 230, 232, 234, 236, and 238 of workflow 220.

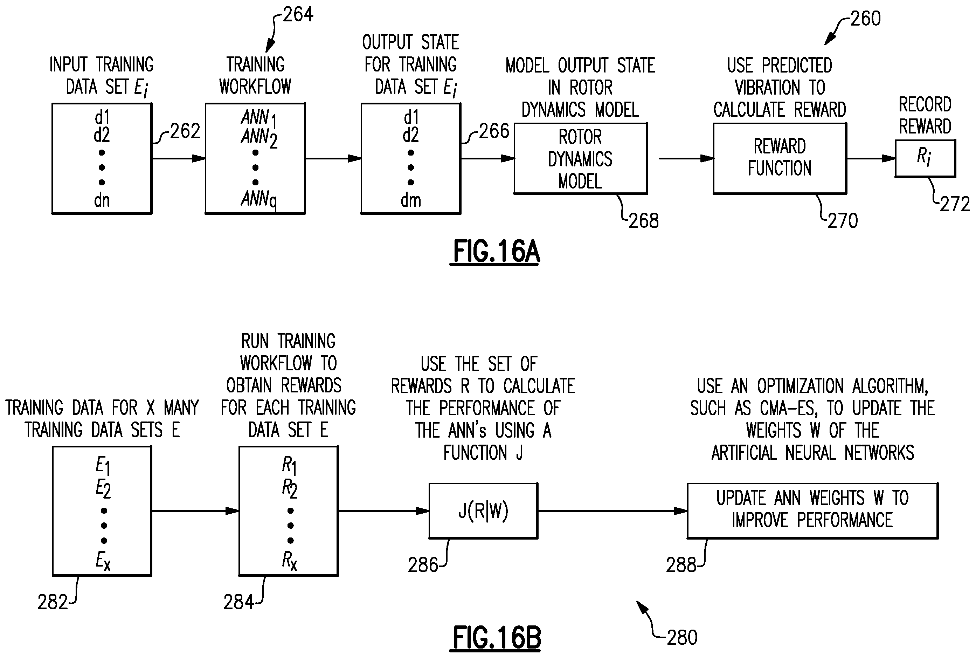

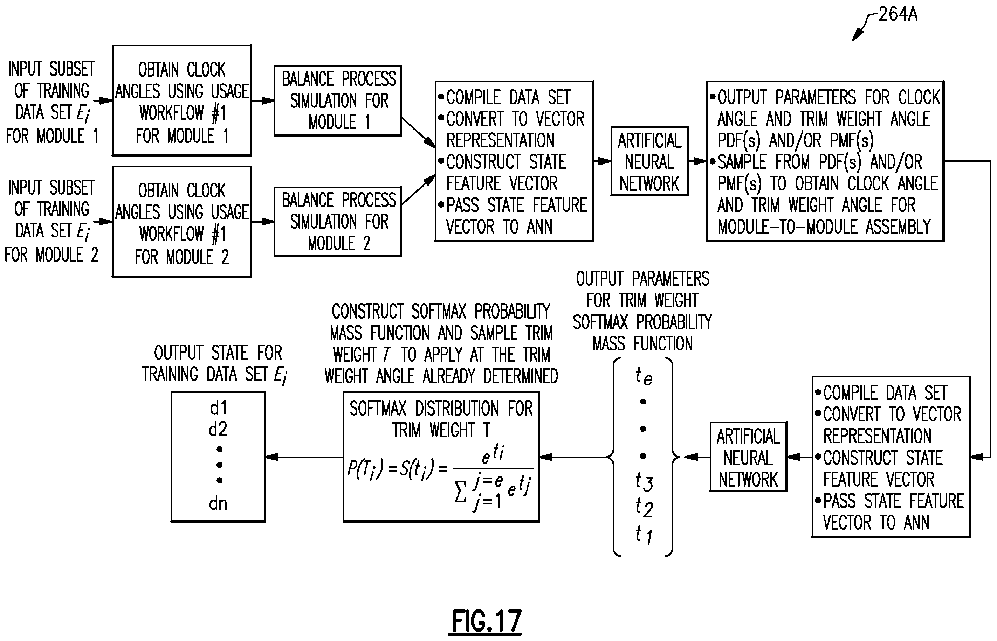

Figure 16A and Figure 16B schematically illustrate an example training process for training and updating the weights of the ANNs of Figures 13-15. Figure 16A shows an example training process 260 that takes one training dataset $E_i$ and obtains one reward $R_i$. This process is repeated to obtain rewards for every training data set. Figure 16B shows the remainder of the training process 280 that uses the performance function $J(R|W)$ to calculate the performance of the ANNs. Input training data 262 includes individual training data sets (one of which is shown in Figure 16A) which each have numeric data corresponding to the radial offsets, squareness errors, and possibly also residual unbalances of the rotors in the modules being analyzed in the workflows. Each training data set 172 is input into a training workflow 264 (discussed further in Figures 17-18) which outputs a new output state 266 which in addition to the data in the training data set 262 includes the determined clock angles, and trim weight angle and trim weight. This output state is modeled into a rotor dynamics model 268 which then outputs predicted vibration at locations of interest. This predicted vibration is then passed to a reward function 270 which calculates a reward 272. This process 260 is repeated for all training data sets until all rewards $R_i$ have been determined.

Figure 16B schematically illustrates a process 280 to update the weights of ANNs. Numeral 282 refers to a group of X training data sets 262. For each individual training data set in 282, a corresponding reward shown in 284 is obtained. After this, the performance of the ANNs are quantified by the performance function J (286) which calculates a performance metric. The performance function J is a scalar valued function which takes as input the set of rewards determined for the training data sets 282. The notation J(R|W) highlights the dependency of the rewards on the weights W of the Neural Networks (read J of R given W). Once the performance has been calculated using the performance function J, the weights of the Neural Networks can be updated (step 288) so as to optimize the performance. Various optimization algorithms exist however CMA-ES is particularly robust and capable. The training process 280 is repeated until the ANN weights W converge to values that provide optimal performance. Additionally, during the training of the ANNs, the choice of activation functions for each neuron can be iterated on as desired until optimal performance is achieved.

Figure 16A highlights the usage of a rotor dynamics model 268 in the training process to calculate one or more metrics related to vibration of the gas turbine engine, such as a predicted vibration or forces transmitted to the static structure of the engine. In practice, rotor dynamics models are used to obtain physical insight into the dynamic behavior of a gas turbine engine under consideration. Such insights include deflections at certain locations and the associated speed of deflection which facilitates calculation of vibration measured in ips (inches per second), or in mm/s (millimeters per second), at a location of interest. The rotor dynamics model 268 is capable of modeling the drivers of unbalance, including geometric drivers of unbalance, and is representative of the engines under consideration and, when supplied inputs such as unbalances, is capable of outputting the resultant deflections and vibrations at locations and rotational speeds of interest. The usage of the rotor dynamics model 268 allows the ANNs to learn the dynamic behavior of the gas turbine engine 20 depending on a given state. The rotor dynamics model may make use of the Transfer Matrix Method, the Finite Element Method, or a combination of both as described in literature, such as Mucino and V. Pavelic, "An Exact Condensation Procedure for Chain - Like Structures Using a Finite Element - Transfer Matrix Approach," Trans. ASME, J. Mech. Design, pp 295-305 (1981), for example. Stiffnesses, or more generally impedances used in such a rotor dynamics model may also come from external sources such as hardware test or engine test measurements. Discretion may be used as appropriate to simplify such a rotor dynamics model but generally, the rotating hardware, key static hardware and bearings are modeled as needed and as appropriate to obtain physical insights (e.g. deflections, vibration) of sufficient accuracy to be useful. The rotor dynamics model simulation elucidates inherent modal tendencies of rotating components, and of static components of the gas turbine engine 20 (e.g., mid turbine frame, turbine exhaust case, and intermediate case).

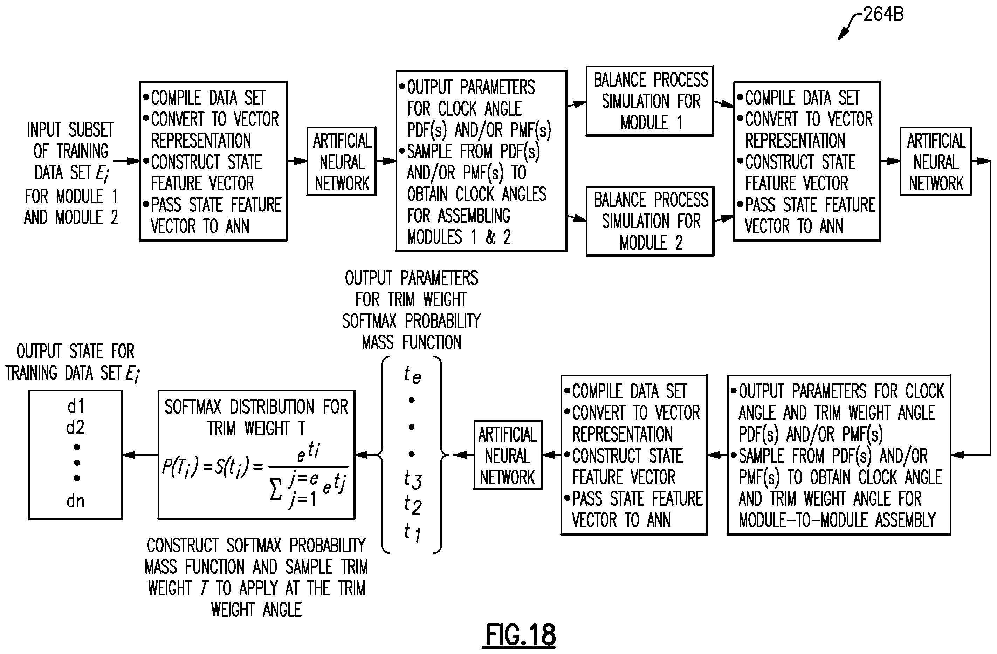

Figure 17 and Figure 18 schematically illustrate two example training workflows 264A-B suitable for the training workflow 264 mentioned in Figure 16A. The training workflows 264A-B are similar to the usage workflows already described in previous paragraphs. The important difference is that during training, no modules and no engines are assembled. Thus, the balance process steps 226, 228 mentioned in workflows 220, 240 are replaced with balance process simulations. The balance process simulations can be done with one or more rotor dynamics models modeling the modules and the associated tooling used in the balance process however a simpler approach considering only the position of mass or unbalance in space would suffice.

Figure 19 is a schematic view of an example system 300 for optimizing the assembly of rotating hardware of a gas turbine engine (e.g., the gas turbine engine 20 of Figure 1), to correspondingly mitigate undesired vibration during operation of the gas turbine engine 20. The example system 300 includes a computing device 302 configured perform one or more steps of the workflows described above optimize the assembly of engine modules 302A-B in the example gas turbine engine 20 of Figure 1. Each module includes a plurality of stages 304 of rotating hardware. In one example, the module 302A is HPC 52 and the module 302B is the HPT 54. In another example, the module 302A is the LPC 44 and the module 302B is the LPT 46.

The computing device 302 includes processing circuitry 310 operatively connected to memory 312 and a communication interface 314. The processing circuitry 310 may include one or more microprocessors, microcontrollers, application specific integrated circuits (ASICs), or the like, for example. The processing circuitry 310 may be configured to implement any of the methods / workflows / processes discussed above.

The memory 312 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 312 may incorporate electronic, magnetic, optical, and/or other types of storage media. The memory 312 can also have a distributed architecture, where various components are situated remotely from one another, but can be accessed by the processor 302. The memory 312 includes the ANNs 150A1, 150A2, 150B, and 150C discussed above, and also the rotor dynamics model 268.

The communication interface 314 is configured to receive measurement data from one or more measurement probes 316, and to output data for display on an electronic display 318. It is understood that this is a non-limiting example, and that the probes could be connected to a separate computer.

The techniques discussed herein improve the prior art approach discussed above by utilizing ANNs and the accompanying workflows. Considering that the inertial forces acting on rotating masses scales with the square of the angular velocity but scales linearly with mass and radius, one can imagine distributing the unbalance in a module so as to have it excite a lower speed mode rather than a higher speed mode may actually reduce vibration in the engine, even if the distribution of unbalance exciting the lower speed mode has a higher net unbalance. To minimize vibration in a gas turbine engine, as discussed above, the ANNs are trained to determine sets of optimal clock angles when supplied inputs pertaining to the drivers of unbalance in a module. As also discussed above, the methodology can be extended to optimally clock one module assembly with respect to another module assembly as well as determining an optimal amount of balance correction weights to apply before assembling two modules together.

Although example embodiments have been disclosed, a worker of ordinary skill in this art would recognize that certain modifications would come within the scope of this invention, as defined with the following claims.

**Claims**

1. A method of optimizing the assembly of rotating hardware of a gas turbine engine (20) to mitigate vibration, the method comprising:

   obtaining for each of one or more modules (302A; 302B) of a gas turbine engine (20), a respective input data set (152) indicative of one or more contributors to unbalance for one or more of a plurality of stages (304) of the module; and

   for each of the one or more modules (302A; 302B), utilizing one or more first neural networks (150A) associated with the module to obtain, based on the respective input data set (152) for the module, a set of optimized clock angles (168) for arranging the stages (304) of the module (302A; 302B) relative to each other to mitigate vibration of the gas turbine engine (20), wherein each of the one or more first neural networks (150A) has been trained with:

      training data comprising the one or more contributors to unbalance; and
      one or more rotor dynamics models that use the training data and the set of clock angles (168) from the one or more first neural networks to predict vibration at one or more locations of interest in the gas turbine engine (20).

2. The method of claim 1, wherein for each stage of the one or more modules (302A; 302B), the one or more contributors to unbalance include at least one of:

   a radial offset for at least one of the plurality of stages (304);

a squareness error for at least one of the plurality of stages (304); and
a residual unbalance due to an inherent mass offset for at least one of the plurality of stages (304).

3. The method of claim 1 or 2, wherein:

the one or more modules (302A; 302B) includes a first module (302A) and a second module (302B);
the method comprises utilizing a second neural network (150B) to determine an optimized inter-module clock angle for arranging the second module (302B) relative to the first module (302A) to mitigate vibration of the gas turbine engine (20); and
the second neural network (150B) has also been trained with one of the one or more rotor dynamics models, which uses the training data, the sets of clock angles (168), and the inter-module clock angle to predict vibration at one or more locations of interest in the gas turbine engine (20).

4. The method of claim 3, comprising:

assembling the first module (302A) of the gas turbine engine (20) utilizing the set of optimized clock angles (168) for the first module;
assembling the second module (302B) of the gas turbine engine (20) utilizing the set of optimized clock angles (168) for the second module; and
arranging the first module (302A) and second module (302B) relative to each other in the gas turbine engine (20) utilizing the inter-module clock angle.

5. The method of claim 3, wherein:

the method includes, for each of the one or more modules (302A; 302B):

utilizing the second neural network (150B) to determine at least one trim weight angle; and
utilizing a third neural network (150C) to determine at least one trim weight magnitude;

said arranging the first module (302A) and second module (302B) relative to each other includes adding one or more trim weights to the first module (302A) or second module (302B) that use one of the determined trim weight magnitudes and one of the determined trim weight angles;
the third neural network (150C) has also been trained with one of the one or more rotor dynamics models, which uses the training data, the sets of clock angles (168), and the inter-module clock angle to predict vibration at one or more locations of interest in the gas turbine engine (20); and
the second (150B) and third (150C) neural networks have also been trained with the at least one trim weight angle and the at least one trim weight magnitude.

6. The method of claim 5, comprising:

for each of a plurality of training data sets (262):

utilizing one of the one or more rotor dynamics models to perform at least one rotor dynamics model simulation for the training data set (262) to determine one or more metrics related to vibration of the gas turbine engine (20), the one or more metrics including at least one of a predicted vibration or forces transmitted to a static structure of the gas turbine engine (20); and
utilizing at least one reward function (270) to calculate a reward (272) for the training data set (262) based on the one or more metrics;

calculating a performance metric (286) for the one or more first neural networks (150A), second neural network (150B), and third neural network (150C) using a performance function based on the rewards calculated for the training data sets (262); and
utilizing an optimization algorithm to update weights (144) of the one or more first neural networks, second neural network, and third neural network to improve the performance of the one or more first neural networks, second neural network, and third neural network as calculated by the performance function.

7. A system (300) for optimizing assembly of rotating hardware of a gas turbine engine (20) to mitigate vibration, the system (300) comprising processing circuitry (310) operatively connected to memory (312), the processing circuitry (310) configured to:

obtain for each of one or more modules (302A; 302B) of a gas turbine engine (20), a respective input data set (152) indicative of one or more contributors to unbalance for one or more of a plurality of stages (304) of the module; and for each of the one or more modules (302A; 302B), utilize one or more first neural networks (150A) associated with the module to obtain, based on the respective input data set (152) for the module, a set of optimized clock angles (168) for arrangement of the stages (304) of the module relative to each other to mitigate vibration of the gas turbine engine (20), wherein each of the one or more first neural networks (150A) has been trained with:

training data comprising the one or more contributors to unbalance; and one or more rotor dynamics models that use the training data and the set of clock angles (168) from the one or more first neural networks (150A) to predict vibration at one or more locations of interest in the gas turbine engine (20).

8. The system (300) of claim 7, wherein for each stage of the one or more modules (302A; 302B), the one or more contributors to unbalance include at least one of:

a radial offset for at least one of the plurality of stages (304); a squareness error for at least one of the plurality of stages (304); and a residual unbalance due to an inherent mass offset for at least one of the plurality of stages (304).

9. The system (300) of claim 7 or 8, wherein:

the one or more modules (302A; 302B) includes a first module (302A) and a second module (302B); and the processing circuitry (310) is configured to:

utilize a second neural network (150B) to determine an optimized inter-module clock angle for arranging the second module (302B) relative to the first module (302A) to mitigate vibration of the gas turbine engine (20); wherein the second neural network (150B) has also been trained with one of the one or more rotor dynamics models, which uses the training data, the sets of clock angles (168), and the inter-module clock angle to predict vibration at one or more locations of interest in the gas turbine engine (20).

10. The system (300) of claim 9, wherein the processing circuitry (310) is configured to, for each of the one or more modules (302A; 302B):

utilize the second neural network (150B) to determine at least one trim weight angle; and utilize a third neural network (150C) to determine at least one trim weight magnitude corresponding to the at least one trim weight to be used during assembly of the gas turbine engine (20), wherein:

the third neural network (150C) has also been trained with one of the one or more rotor dynamics models, which uses the training data, the sets of clock angles (168), and the inter-module clock angle to predict vibration at one or more locations of interest in the gas turbine engine (20); and the second neural network (150B) and third neural network (150C) have also trained with the at least one trim weight angle and the at least one trim weight magnitude.

11. The system (300) of claim 10, wherein the processing circuitry (310) is configured to, for each of a plurality of training data sets (262):

utilize one of the one or more rotor dynamics models to perform at least one rotor dynamics model simulation for the training data set (262) to determine one or more metrics related to vibration of the gas turbine engine (20), the one or more metrics including at least one of a predicted vibration or forces transmitted to a static structure of the gas turbine engine (20); and utilize at least one reward function (270) to calculate a reward (272) for the training data set (262) based on the one or more metrics; calculate a performance metric (286) for the one or more first neural networks (150A), second neural network (150B), and third neural network (150C) using a performance function based on the rewards calculated for the training data sets (262); and utilize an optimization algorithm to update weights (144) of the one or more first neural networks, second neural network, and third neural network to improve the performance of the one or more first neural networks, second neural network, and third neural network as calculated by the performance function.

12. The method of any of claims 3 to 6, or the system (300) of any of claims 7 to 11, wherein the one or more first neural networks include a neural network (150A1) associated with the first module (302A) and a separate second neural network (150A2) associated with the second module (302B).

13. The method of any of claims 3 to 6, or the system (300) of any of claims 7 to 11, wherein the one or more first neural networks include a neural network (150A3) associated with both of the first module (302A) and the second module (302B).

14. The method of any of claims 3 to 6 or 12 to 13, or the system (300) of any of claims 7 to 13, wherein:

the first module (302A) is a high pressure compressor (52) of the gas turbine engine (20), and the second module (302B) is a high pressure turbine (54) of the gas turbine engine (20); or
the first module (302A) is a low pressure compressor (44) of the gas turbine engine (20), and the second module (302B) is a low pressure turbine (46) of the gas turbine engine (20).

15. The method of any of claims 3 to 6 or 12 to 13, wherein:

the method is performed where the first module (302A) is a high pressure compressor (52) of the gas turbine engine (20) and the second module (302B) is a high pressure turbine (54) of the gas turbine engine (20); and
the method is separately performed where the first module (302A) is a low pressure compressor (44) of the gas turbine engine (20) and the second module (302B) is a low pressure turbine (46) of the gas turbine engine (20).

**Patentansprüche**

1. Verfahren zur Optimierung der Montage von rotierender Hardware eines Gasturbinenmotors (20), um Vibrationen zu mindern, wobei das Verfahren Folgendes umfasst:

Erlangen eines jeweiligen Eingangsdatensatzes (152) für jedes von einem oder mehreren Modulen (302A; 302B) eines Gasturbinenmotors (20), der indikativ für eine oder mehrere Ursachen für die Unwucht für eine oder mehrere einer Vielzahl von Stufen (304) des Moduls ist; und
für jedes des einen oder der mehreren Module (302A; 302B), Verwenden eines oder mehrerer erster neuronaler Netze (150A), die mit dem Modul assoziiert sind, um basierend auf dem jeweiligen Eingangsdatensatz (152) für das Modul einen Satz optimierter Taktwinkel (168) zu erlangen, um die Stufen (304) des Moduls (302A; 302B) relativ zueinander anzuordnen, um die Vibration des Gasturbinenmotors (20) zu mindern, wobei jedes des einen oder der mehreren ersten neuronalen Netze (150A) mit Folgenden trainiert worden ist:

Trainingsdaten, umfassend die eine oder die mehreren Ursachen für die Unwucht; und
einem oder mehreren Rotordynamikmodelle, die die Trainingsdaten und den Satz von Taktwinkeln (168) aus dem einen oder den mehreren ersten neuronalen Netzen verwenden, um Vibrationen an einer oder mehreren Positionen von Interesse in dem Gasturbinenmotor (20) vorherzusagen.

2. Verfahren nach Anspruch 1, wobei für jede Stufe des einen oder der mehreren Module (302A; 302B) die eine oder die mehreren Ursachen für die Unwucht mindestens eines der Folgenden beinhalten:

einen radialen Versatz für mindestens eine der Vielzahl von Stufen (304);
einen Rechtwinkligkeitsfehler für mindestens eine der Vielzahl von Stufen (304); und
eine Restunwucht aufgrund eines inhärenten Versatzes der Masse für mindestens eine der Vielzahl von Stufen (304).

3. Verfahren nach Anspruch 1 oder 2, wobei:

das eine oder die mehreren Module (302A; 302B) ein erstes Modul (302A) und ein zweites Modul (302B) beinhalten;
das Verfahren das Verwenden eines zweiten neuronalen Netzes (150B) umfasst, um einen optimierten Taktwinkel zwischen den Modulen zu bestimmen, um das zweite Modul (302B) relativ zu dem ersten Modul (302A) anzuordnen, um die Vibration des Gasturbinenmotors (20) zu mindern; und

das zweite neuronale Netz (150B) ebenfalls mit einem des einen oder mehreren Rotordynamikmodellen trainiert wurde, das die Trainingsdaten, die Sätze von Taktwinkeln (168) und den Taktwinkel zwischen den Modulen verwendet, um die Vibration an einer oder mehreren Positionen von Interesse in dem Gasturbinenmotor (20) vorherzusagen.

4. Verfahren nach Anspruch 3, umfassend:

Montieren des ersten Moduls (302A) des Gasturbinenmotors (20) unter Verwendung des Satzes von optimierten Taktwinkeln (168) für das erste Modul;

Montieren des zweiten Moduls (302B) des Gasturbinenmotors (20) unter Verwendung des Satzes von optimierten Taktwinkeln (168) für das zweite Modul; und

Anordnen des ersten Moduls (302A) und des zweiten Moduls (302B) relativ zueinander in dem Gasturbinenmotor (20) unter Verwendung des Taktwinkels zwischen den Modulen.

5. Verfahren nach Anspruch 3, wobei:

das Verfahren für jedes der ein oder mehreren Module (302A; 302B) Folgendes beinhaltet:

Verwenden des zweiten neuronalen Netzes (150B), um mindestens einen Trimmgewichtswinkel zu bestimmen; und

Verwenden eines dritten neuronalen Netzes (150C), um mindestens eine Trimmgewichtsgröße zu bestimmen; wobei das Anordnen des ersten Moduls (302A) und des zweiten Moduls (302B) relativ zueinander das Hinzufügen eines oder mehrerer Trimmgewichte zu dem ersten Modul (302A) oder dem zweiten Modul (302B) beinhaltet, die eine der bestimmten Trimmgewichtsgrößen und einen der bestimmten Trimmgewichtswinkel verwenden;

das dritte neuronale Netz (150C) ebenfalls mit einem des einen oder mehreren Rotordynamikmodellen trainiert wurde, das die Trainingsdaten, die Sätze von Taktwinkeln (168) und den Taktwinkel zwischen den Modulen verwendet, um die Vibration an einer oder mehreren Positionen von Interesse in dem Gasturbinenmotor (20) vorherzusagen; und

das zweite (150B) und das dritte (150C) neuronale Netz ebenfalls mit dem mindestens einen Trimmgewichtswinkel und der mindestens einen Trimmgewichtsgröße trainiert worden sind.

6. Verfahren nach Anspruch 5, umfassend:

für jeden der Vielzahl von Trainingsdatensätzen (262):

Verwenden von einem des einen oder der mehreren Rotordynamikmodelle, um mindestens eine Rotordynamikmodellsimulation für den Trainingsdatensatz (262) durchzuführen, um eine oder mehrere Metriken zu bestimmen, die sich auf die Vibration des Gasturbinenmotors (20) beziehen, wobei die eine oder die mehreren Metriken mindestens eine vorhergesagte Vibration oder Kräfte beinhalten, die auf eine statische Struktur des Gasturbinenmotors (20) übertragen werden; und

Verwenden von mindestens einer Belohnungsfunktion (270), um eine Belohnung (272) für den Trainingsdatensatz (262) basierend auf der einen oder den mehreren Metriken zu berechnen;

Berechnen einer Leistungsmetrik (286) für das eine oder die mehreren ersten neuronalen Netze (150A), das zweite neuronale Netz (150B) und das dritte neuronale Netz (150C) unter Verwendung einer Leistungsfunktion basierend auf den für die Trainingsdatensätze (262) berechneten Belohnungen; und

Verwenden eines Optimierungsalgorithmus, um die Gewichte (144) des einen oder der mehreren ersten neuronalen Netze, des zweiten neuronalen Netzes und des dritten neuronalen Netzes zu aktualisieren, um die Leistung des einen oder der mehreren ersten neuronalen Netze, des zweiten neuronalen Netzes und des dritten neuronalen Netzes, wie durch die Leistungsfunktion berechnet, zu verbessern.

7. System (300) zur Optimierung der Montage von rotierender Hardware eines Gasturbinenmotors (20), um Vibrationen zu mindern, wobei das System (300) eine Verarbeitungsschaltung (310) umfasst, die mit einem Speicher (312) wirkverbunden ist, wobei die Verarbeitungsschaltung (310) zu Folgendem konfiguriert ist:

Erlangen eines jeweiligen Eingangsdatensatzes (152) für jedes von einem oder mehreren Modulen (302A; 302B) eines Gasturbinenmotors (20), der indikativ für eine oder mehrere Ursachen für die Unwucht für eine oder mehrere einer Vielzahl von Stufen (304) des Moduls ist; und

für jedes der ein oder mehreren Module (302A; 302B), Verwenden eines oder mehrerer erster neuronaler Netze (150A), die mit dem Modul assoziiert sind, um basierend auf dem jeweiligen Eingangsdatensatz (152) für das Modul einen Satz optimierter Taktwinkel (168) zur Anordnung der Stufen (304) des Moduls relativ zueinander, zu erlangen, um die Vibration des Gasturbinenmotors (20) zu mindern, wobei jedes des einen oder der mehreren ersten neuronalen Netze (150A) mit Folgenden trainiert worden ist:

Trainingsdaten, umfassend die eine oder die mehreren Ursachen für die Unwucht; und
einem oder mehreren Rotordynamikmodelle, die die Trainingsdaten und den Satz von Taktwinkeln (168) aus dem einen oder den mehreren ersten neuronalen Netzen (150A) verwenden, um Vibrationen an einer oder mehreren Positionen von Interesse in dem Gasturbinenmotor (20) vorherzusagen.

8. System (300) nach Anspruch 7, wobei für jede Stufe des einen oder der mehreren Module (302A; 302B) die eine oder die mehreren Ursachen für die Unwucht mindestens eines der Folgenden beinhalten:

einen radialen Versatz für mindestens eine der Vielzahl von Stufen (304);
einen Rechtwinkligkeitsfehler für mindestens eine der Vielzahl von Stufen (304); und
eine Restunwucht aufgrund eines inhärenten Versatzes der Masse für mindestens eine der Vielzahl von Stufen (304).

9. System (300) nach Anspruch 7 oder 8, wobei:

das eine oder die mehreren Module (302A; 302B) ein erstes Modul (302A) und ein zweites Modul (302B) beinhalten; und
die Verarbeitungsschaltung (310) zu Folgendem konfiguriert ist: Verwenden eines zweiten neuronalen Netzes (150B), um einen optimierten Taktwinkel zwischen den Modulen zu bestimmen, um das zweite Modul (302B) relativ zu dem ersten Modul (302A) anzuordnen, um die Vibration des Gasturbinenmotors (20) zu mindern; wobei das zweite neuronale Netz (150B) ebenfalls mit einem des einen oder mehreren Rotordynamikmodellen trainiert wurde, das die Trainingsdaten, die Sätze von Taktwinkeln (168) und den Taktwinkel zwischen den Modulen verwendet, um die Vibration an einer oder mehreren Positionen von Interesse in dem Gasturbinenmotor (20) vorherzusagen.

10. System (300) nach Anspruch 9, wobei die Verarbeitungsschaltung (310) für jedes des einen oder der mehreren Module (302A; 302B) wie folgt konfiguriert ist:

Verwenden des zweiten neuronalen Netzes (150B), um mindestens einen Trimmgewichtswinkel zu bestimmen; und
Verwenden eines dritten neuronalen Netzes (150C), um mindestens eine Trimmgewichtsgröße zu bestimmen, die dem mindestens einen Trimmgewicht entspricht, das während der Montage des Gasturbinenmotors (20) zu verwenden ist, wobei:

das dritte neuronale Netz (150C) ebenfalls mit einem des einen oder mehreren Rotordynamikmodellen trainiert wurde, das die Trainingsdaten, die Sätze von Taktwinkeln (168) und den Taktwinkel zwischen den Modulen verwendet, um die Vibration an einer oder mehreren Positionen von Interesse in dem Gasturbinenmotor (20) vorherzusagen; und
das zweite neuronale Netz (150B) und das dritte neuronale Netz (150C) ebenfalls mit dem mindestens einen Trimmgewichtswinkel und der mindestens einen Trimmgewichtsgröße trainiert worden sind.

11. System (300) nach Anspruch 10, wobei die Verarbeitungsschaltung (310) für jeden der Vielzahl von Trainingsdatensätzen (262) wie folgt konfiguriert ist:

Verwenden von einem des einen oder der mehreren Rotordynamikmodelle, um mindestens eine Rotordynamikmodellsimulation für den Trainingsdatensatz (262) durchzuführen, um eine oder mehrere Metriken zu bestimmen, die sich auf die Vibration des Gasturbinenmotors (20) beziehen, wobei die eine oder die mehreren Metriken mindestens eine vorhergesagte Vibration oder Kräfte beinhalten, die auf eine statische Struktur des Gasturbinenmotors (20) übertragen werden; und
Verwenden von mindestens einer Belohnungsfunktion (270), um eine Belohnung (272) für den Trainingsdatensatz (262) basierend auf der einen oder den mehreren Metriken zu berechnen;
Berechnen einer Leistungsmetrik (286) für das eine oder die mehreren ersten neuronalen Netze (150A), das zweite neuronale Netz (150B) und das dritte neuronale Netz (150C) unter Verwendung einer Leistungsfunktion basierend auf den für die Trainingsdatensätze (262) berechneten Belohnungen; und

Verwenden eines Optimierungsalgorithmus, um die Gewichte (144) des einen oder der mehreren ersten neuronalen Netze, des zweiten neuronalen Netzes und des dritten neuronalen Netzes zu aktualisieren, um die Leistung des einen oder der mehreren ersten neuronalen Netze, des zweiten neuronalen Netzes und des dritten neuronalen Netzes, wie durch die Leistungsfunktion berechnet, zu verbessern.

12. Verfahren nach einem der Ansprüche 3 bis 6 oder System (300) nach einem der Ansprüche 7 bis 11, wobei das eine oder die mehreren ersten neuronalen Netze ein neuronales Netz (150A1) beinhalten, das mit dem ersten Modul (302A) assoziiert ist, und ein separates zweites neuronales Netz (150A2), das mit dem zweiten Modul (302B) assoziiert ist.

13. Verfahren nach einem der Ansprüche 3 bis 6 oder System (300) nach einem der Ansprüche 7 bis 11, wobei das eine oder die mehreren ersten neuronalen Netze ein neuronales Netz (150A3) beinhalten, das sowohl mit dem ersten Modul (302A) als auch mit dem zweiten Modul (302B) assoziiert ist.

14. Verfahren nach einem der Ansprüche 3 bis 6 oder 12 bis 13, oder System (300) nach einem der Ansprüche 7 bis 13, wobei:

das erste Modul (302A) ein Hochdruckverdichter (52) des Gasturbinenmotors (20) ist und das zweite Modul (302B) eine Hochdruckturbine (54) des Gasturbinenmotors (20) ist; oder
das erste Modul (302A) ein Niederdruckverdichter (44) des Gasturbinenmotors (20) ist und das zweite Modul (302B) eine Niederdruckturbine (46) des Gasturbinenmotors (20) ist.

15. Verfahren nach einem der Ansprüche 3 bis 6 oder 12 bis 13, wobei:

das Verfahren durchgeführt wird, in dem das erste Modul (302A) ein Hochdruckverdichter (52) des Gasturbinenmotors (20) ist und das zweite Modul (302B) eine Hochdruckturbine (54) des Gasturbinenmotors (20) ist; und
das Verfahren separat durchgeführt wird, in dem das erste Modul (302A) ein Niederdruckverdichter (44) des Gasturbinenmotors (20) ist und das zweite Modul (302B) eine Niederdruckturbine (46) des Gasturbinenmotors (20) ist.

**Revendications**

1. Procédé d'optimisation de l'assemblage de matériel rotatif d'un moteur à turbine à gaz (20) pour atténuer les vibrations, le procédé comprenant :

l'obtention, pour chacun d'un ou plusieurs modules (302A ; 302B) d'un moteur à turbine à gaz (20), d'un ensemble de données d'entrée (152) respectif indiquant un ou plusieurs contributeurs au déséquilibre pour un ou plusieurs d'une pluralité d'étages (304) du module ; et
pour chacun des un ou plusieurs modules (302A ; 302B), l'utilisation d'un ou plusieurs premiers réseaux neuronaux (150A) associés au module pour obtenir, sur la base de l'ensemble de données d'entrée (152) respectif du module, un ensemble d'angles d'horloge (168) optimisés permettant d'agencer les étages (304) du module (302A ; 302B) les uns par rapport aux autres afin d'atténuer les vibrations du moteur à turbine à gaz (20), dans lequel chacun des un ou plusieurs premiers réseaux neuronaux (150A) a été entraîné avec :

des données d'entraînement comprenant les un ou plusieurs contributeurs au déséquilibre ; et
un ou plusieurs modèles de dynamique de rotor qui utilisent les données d'entraînement et l'ensemble des angles d'horloge (168) des un ou plusieurs premiers réseaux neuronaux pour prédire les vibrations au niveau d'un ou plusieurs emplacements d'intérêt dans le moteur à turbine à gaz (20).

2. Procédé selon la revendication 1, dans lequel, pour chaque étage des un ou plusieurs modules (302A ; 302B), les un ou plusieurs contributeurs au déséquilibre comportent au moins l'un de :

un décalage radial pour au moins l'un de la pluralité d'étages (304) ;
une erreur de perpendicularité pour au moins l'un de la pluralité d'étages (304) ; et

un déséquilibre résiduel dû à un décalage de masse inhérent pour au moins l'un de la pluralité d'étages (304).

3. Procédé selon la revendication 1 ou 2, dans lequel :

les un ou plusieurs modules (302A ; 302B) comportent un premier module (302A) et un second module (302B) ;
le procédé comprend l'utilisation d'un deuxième réseau neuronal (150B) pour déterminer un angle d'horloge inter-module optimisé pour agencer le second module (302B) par rapport au premier module (302A) afin d'atténuer les vibrations du moteur à turbine à gaz (20) ; et
le deuxième réseau neuronal (150B) a également été entraîné avec l'un des un ou plusieurs modèles de dynamique de rotor, qui utilise les données d'entraînement, les ensembles d'angles d'horloge (168) et l'angle d'horloge inter-module pour prédire les vibrations au niveau d'un ou plusieurs emplacements d'intérêt dans le moteur à turbine à gaz (20).

4. Procédé selon la revendication 3, comprenant :

l'assemblage du premier module (302A) du moteur à turbine à gaz (20) en utilisant l'ensemble d'angles d'horloge (168) optimisés pour le premier module ;
l'assemblage du second module (302B) du moteur à turbine à gaz (20) en utilisant l'ensemble d'angles d'horloge (168) optimisés pour le second module ; et
l'agencement du premier module (302A) et du second module (302B) l'un par rapport à l'autre dans le moteur à turbine à gaz (20) en utilisant l'angle d'horloge inter-module.

5. Procédé selon la revendication 3, dans lequel :
le procédé comporte, pour chacun des un ou plusieurs modules (302A ; 302B) :

l'utilisation du deuxième réseau neuronal (150B) pour déterminer au moins un angle de poids de compensation ; et
l'utilisation d'un troisième réseau neuronal (150C) pour déterminer au moins une magnitude de poids de compensation ;
ledit arrangement du premier module (302A) et du second module (302B) l'un par rapport à l'autre comporte l'ajout d'un ou plusieurs poids de compensation au premier module (302A) ou au second module (302B) qui utilisent l'une des magnitudes de poids de compensation déterminées et l'un des angles de poids de compensation déterminés ;
le troisième réseau neuronal (150C) a également été entraîné avec l'un des un ou plusieurs modèles de dynamique de rotor, qui utilise les données d'entraînement, les ensembles d'angles d'horloge (168) et l'angle d'horloge inter-module pour prédire les vibrations au niveau d'un ou plusieurs emplacements d'intérêt dans le moteur à turbine à gaz (20) ; et
les deuxième (150B) et troisième (150C) réseaux neuronaux ont également été entraînés avec l'au moins un angle de poids de compensation et l'au moins une magnitude de poids de compensation.

6. Procédé selon la revendication 5, comprenant :
pour chacun d'une pluralité d'ensembles de données d'entraînement (262) :

l'utilisation d'un des un ou plusieurs modèles de dynamique de rotor pour effectuer au moins une simulation de modèle de dynamique de rotor pour l'ensemble de données d'entraînement (262) afin de déterminer une ou plusieurs métriques liées aux vibrations du moteur à turbine à gaz (20), les une ou plusieurs métriques comportant au moins l'une d'une vibration prédite ou de forces transmises à une structure statique du moteur à turbine à gaz (20) ; et
l'utilisation d'au moins une fonction de récompense (270) pour calculer une récompense (272) pour l'ensemble de données d'entraînement (262) sur la base des une ou plusieurs métriques ;
le calcul d'une métrique de performance (286) pour les un ou plusieurs premiers réseaux neuronaux (150A), le deuxième réseau neuronal (150B) et le troisième réseau neuronal (150C) en utilisant une fonction de performance basée sur les récompenses calculées pour les ensembles de données d'entraînement (262) ; et
l'utilisation d'un algorithme d'optimisation pour mettre à jour les poids (144) des un ou plusieurs premiers réseaux neuronaux, du deuxième réseau neuronal et du troisième réseau neuronal afin d'améliorer les performances des un ou plusieurs premiers réseaux neuronaux, du deuxième réseau neuronal et du troisième réseau neuronal telles que calculées par la fonction de performance.

7. Système (300) pour l'optimisation de l'assemblage de matériel rotatif d'un moteur à turbine à gaz (20) pour atténuer les vibrations, le système (300) comprenant un ensemble de circuits de traitement (310) connecté fonctionnellement à une mémoire (312), l'ensemble de circuits de traitement (310) étant configuré pour :

obtenir, pour chacun d'un ou plusieurs modules (302A ; 302B) d'un moteur à turbine à gaz (20), un ensemble de données d'entrée (152) respectif indiquant un ou plusieurs contributeurs au déséquilibre pour un ou plusieurs d'une pluralité d'étages (304) du module ; et
pour chacun des un ou plusieurs modules (302A ; 302B), utiliser un ou plusieurs premiers réseaux neuronaux (150A) associés au module pour obtenir, sur la base de l'ensemble de données d'entrée (152) respectif du module, un ensemble d'angles d'horloge (168) optimisés pour l'agencement des étages (304) du module les uns par rapport aux autres afin d'atténuer les vibrations du moteur à turbine à gaz (20), dans lequel chacun des un ou plusieurs premiers réseaux neuronaux (150A) a été entraîné avec :

des données d'entraînement comprenant les un ou plusieurs contributeurs au déséquilibre ; et
un ou plusieurs modèles de dynamique de rotor qui utilisent les données d'entraînement et l'ensemble des angles d'horloge (168) des un ou plusieurs premiers réseaux neuronaux (150A) pour prédire les vibrations au niveau d'un ou plusieurs emplacements d'intérêt dans le moteur à turbine à gaz (20).

8. Système (300) selon la revendication 7, dans lequel, pour chaque étage des un ou plusieurs modules (302A ; 302B), les un ou plusieurs contributeurs au déséquilibre comportent au moins l'un de :

un décalage radial pour au moins l'un de la pluralité d'étages (304) ;
une erreur de perpendicularité pour au moins l'un de la pluralité d'étages (304) ; et
un déséquilibre résiduel dû à un décalage de masse inhérent pour au moins l'un de la pluralité d'étages (304).

9. Système (300) selon la revendication 7 ou 8, dans lequel :

les un ou plusieurs modules (302A ; 302B) comportent un premier module (302A) et un second module (302B) ; et
l'ensemble de circuits de traitement (310) est configuré pour : utiliser un deuxième réseau neuronal (150B) pour déterminer un angle d'horloge inter-module optimisé pour agencer le second module (302B) par rapport au premier module (302A) afin d'atténuer les vibrations du moteur à turbine à gaz (20) ;
dans lequel le deuxième réseau neuronal (150B) a également été entraîné avec l'un des un ou plusieurs modèles de dynamique de rotor, qui utilise les données d'entraînement, les ensembles d'angles d'horloge (168) et l'angle d'horloge inter-module pour prédire les vibrations au niveau d'un ou plusieurs emplacements d'intérêt dans le moteur à turbine à gaz (20).

10. Système (300) selon la revendication 9, dans lequel l'ensemble de circuits de traitement (310) est configuré pour, pour chacun des un ou plusieurs modules (302A ; 302B) :

utiliser le deuxième réseau neuronal (150B) pour déterminer au moins un angle de poids de compensation ; et
utiliser un troisième réseau neuronal (150C) pour déterminer au moins une magnitude de poids de compensation correspondant à l'au moins un poids de compensation à utiliser lors de l'assemblage du moteur à turbine à gaz (20), dans lequel :

le troisième réseau neuronal (150C) a également été entraîné avec l'un des un ou plusieurs modèles de dynamique de rotor, qui utilise les données d'entraînement, les ensembles d'angles d'horloge (168) et l'angle d'horloge inter-module pour prédire les vibrations au niveau d'un ou plusieurs emplacements d'intérêt dans le moteur à turbine à gaz (20) ; et
le deuxième réseau neuronal (150B) et le troisième réseau neuronal (150C) ont également été entraînés avec l'au moins un angle de poids de compensation et l'au moins une magnitude de poids de compensation.

11. Système (300) selon la revendication 10, dans lequel l'ensemble de circuits de traitement (310) est configuré pour, pour chacun d'une pluralité d'ensembles de données d'entraînement (262) :

utiliser un des un ou plusieurs modèles de dynamique de rotor pour effectuer au moins une simulation de modèle de dynamique de rotor pour l'ensemble de données d'entraînement (262) afin de déterminer une ou plusieurs métriques liées aux vibrations du moteur à turbine à gaz (20), les une ou plusieurs métriques comportant au moins l'une d'une vibration prédite ou de forces transmises à une structure statique du moteur à turbine à gaz (20) ; et

utiliser au moins une fonction de récompense (270) pour calculer une récompense (272) pour l'ensemble de données d'entraînement (262) sur la base des une ou plusieurs métriques ;

calculer une métrique de performance (286) pour les un ou plusieurs premiers réseaux neuronaux (150A), le deuxième réseau neuronal (150B) et le troisième réseau neuronal (150C) en utilisant une fonction de performance basée sur les récompenses calculées pour les ensembles de données d'entraînement (262) ; et

utiliser un algorithme d'optimisation pour mettre à jour les poids (144) des un ou plusieurs premiers réseaux neuronaux, du deuxième réseau neuronal et du troisième réseau neuronal afin d'améliorer les performances des un ou plusieurs premiers réseaux neuronaux, du deuxième réseau neuronal et du troisième réseau neuronal telles que calculées par la fonction de performance.

12. Procédé selon l'une quelconque des revendications 3 à 6, ou système (300) selon l'une quelconque des revendications 7 à 11, dans lequel les un ou plusieurs premiers réseaux neuronaux comportent un réseau neuronal (150A1) associé au premier module (302A) et un deuxième réseau neuronal distinct (150A2) associé au second module (302B).

13. Procédé selon l'une quelconque des revendications 3 à 6, ou système (300) selon l'une quelconque des revendications 7 à 11, dans lequel les un ou plusieurs premiers réseaux neuronaux comportent un réseau neuronal (150A3) associé à la fois au premier module (302A) et au second module (302B).

14. Procédé selon l'une quelconque des revendications 3 à 6 ou 12 à 13, ou système (300) selon l'une quelconque des revendications 7 à 13, dans lequel :

le premier module (302A) est un compresseur haute pression (52) du moteur à turbine à gaz (20), et le second module (302B) est une turbine haute pression (54) du moteur à turbine à gaz (20) ; ou
le premier module (302A) est un compresseur basse pression (44) du moteur à turbine à gaz (20), et le second module (302B) est une turbine basse pression (46) du moteur à turbine à gaz (20).

15. Procédé selon l'une quelconque des revendications 3 à 6 ou 12 à 13, dans lequel :

le procédé est effectué où le premier module (302A) est un compresseur haute pression (52) du moteur à turbine à gaz (20), et le second module (302B) est une turbine haute pression (54) du moteur à turbine à gaz (20) ; et
le procédé est effectue de manière distincte où le premier module (302A) est un compresseur basse pression (44) du moteur à turbine à gaz (20), et le second module (302B) est une turbine basse pression (46) du moteur à turbine à gaz (20).

FIG.1

**FIG.2**

**FIG.3**

FIG.4

_FIG.5_

_FIG.6_

_FIG.7_

ROTOR 80A

112A

ROTOR 80B

ROTOR 80C

120A

120B

120C

106

**FIG.8**

ROTOR 80C

ROTOR 80B

ROTOR 80A

120C

120B

120A

106

**FIG.9**

ROTOR 80B

ROTOR 80A

120B

ROTOR 80C

120A

120C

106

**FIG.10**

EP 4 474 616 B1

142
144
140
146

NUMERIC
INPUTS

INPUT
WEIGHTS

NEURON

OUTPUT

d3 —— w3

d2 —— w2

ACTIVATION FUNCTION
Z(x)

z

d1 —— w1

b

FIG.11

NUMERIC INPUTS $\lceil$142

INPUT LAYER $\lceil$154

HIDDEN LAYERS $\lceil$160

OUTPUT LAYER $\lceil$156

NUMERIC OUTPUTS $\lceil$158

$d_n$
·
·
·
·
$d_3$
$d_2$
$d_1$

152

140

$z_3$
$z_2$
$z_1$

'NEURAL NETWORK'
(150)

FIG.12

NUMERIC INPUTS

$$\left\{ \begin{array}{c} d_1 \\ \bullet \\ \bullet \\ \bullet \\ d_3 \\ d_2 \\ d_1 \end{array} \right\}$$

152

202 CONVERT TO VECTOR REPRESENTATION

INPUT VECTORS

$$\left\{ \begin{array}{c} v_m \\ \bullet \\ \bullet \\ \bullet \\ v_3 \\ v_2 \\ v_1 \end{array} \right\}$$

162

204 CONSTRUCT INPUT VECTOR REPRESENTATIVE OF STATE

STATE FEATURE VECTOR

$$\left\{ \begin{array}{c} f_p(v) \\ \bullet \\ \bullet \\ \bullet \\ f_3(v) \\ f_2(v) \\ f_1(v) \end{array} \right\}$$

164

206 PASS STATE FEATURE VECTOR TO NEURAL NETWORK INPUT LAYER

150A ARTIFICIAL NEURAL NETWORK

200

OUTPUT PARAMETERS FOR CLOCK ANGLE PROBABILITY DENSITY FUNCTION(s) AND/OR PROBABILITY MASS FUNCTION(s)

$$\left\{ \begin{array}{c} \Theta_n \\ \bullet \\ \bullet \\ \bullet \\ \Theta_3 \\ \Theta_2 \\ \Theta_1 \end{array} \right\}$$

168

208 SAMPLE FROM PDF(s) AND/OR PMF(s) TO OBTAIN CLOCK ANGLES FOR PARTS IN MODULE

$$\left\{ \begin{array}{c} z_r \\ \bullet \\ \bullet \\ \bullet \\ z_3 \\ z_2 \\ z_1 \end{array} \right\}$$

166

<u>FIG.13</u>

220

232 •OUTPUT PARAMETERS FOR CLOCK ANGLE AND TRIM WEIGHT ANGLE PDF(s) AND/OR PMF(s)
•SAMPLE FROM PDF(s) AND/OR PMF(s) TO OBTAIN CLOCK ANGLE AND TRIM WEIGHT ANGLE FOR MODULE-TO-MODULE ASSEMBLY

150B ARTIFICIAL NEURAL NETWORK

230 •COMPILE DATA SET
•CONVERT TO VECTOR REPRESENTATION
•CONSTRUCT STATE FEATURE VECTOR
•PASS STATE FEATURE VECTOR TO ANN

226 ASSEMBLE AND BALANCE MODULE 1

228 ASSEMBLE AND BALANCE MODULE 2

222 MODULE 1 → OBTAIN CLOCK ANGLES USING ARTIFICIAL NEURAL NETWORK FOR MODULE 1

224 MODULE 2 → OBTAIN CLOCK ANGLES USING ARTIFICIAL NEURAL NETWORK FOR MODULE 2

OUTPUT PARAMETERS FOR TRIM WEIGHT SOFTMAX PROBABILITY MASS FUNCTION

CONSTRUCT SOFTMAX PROBABILITY MASS FUNCTION AND SAMPLE TRIM WEIGHT T TO APPLY AT THE TRIM WEIGHT ANGLE ALREADY DETERMINED

234 •COMPILE DATA SET
•CONVERT TO VECTOR REPRESENTATION
•CONSTRUCT STATE FEATURE VECTOR
•PASS STATE FEATURE VECTOR TO ANN

150C ARTIFICIAL NEURAL NETWORK

170 $\{ t_e \quad \bullet \quad \bullet \quad \bullet \quad t_3 \quad t_2 \quad t_1 \}$

236 SOFTMAX DISTRIBUTION FOR TRIM WEIGHT T
$$P(T_i) = S(t_i) = \frac{e^{t_i}}{\sum_{j=1}^{j=e} e^{t_j}}$$

238 ASSEMBLE MODULE 2 TO MODULE 1 USING CLOCK ANGLE, TRIM WEIGHT ANGLE AND TRIM WEIGHT

FIG.14

31

MODULE 1
DATA →

**242**
- COMPILE DATA SET
- CONVERT TO VECTOR REPRESENTATION
- CONSTRUCT STATE FEATURE VECTOR
- PASS STATE FEATURE VECTOR TO ANN

MODULE 2
DATA →

**150A3**
ARTIFICIAL NEURAL NETWORK

**244′**
- OUTPUT PARAMETERS FOR CLOCK ANGLE PDF(s) AND/OR PMF(s)
- SAMPLE FROM PDF(s) AND/OR PMF(s) TO OBTAIN CLOCK ANGLES FOR ASSEMBLING MODULES 1 & 2

**226**
ASSEMBLE AND BALANCE MODULE 1

**228**
ASSEMBLE AND BALANCE MODULE 2

**230′**
- COMPILE DATA SET
- CONVERT TO VECTOR REPRESENTATION
- CONSTRUCT STATE FEATURE VECTOR
- PASS STATE FEATURE VECTOR TO ANN

**150B**
ARTIFICIAL NEURAL NETWORK

**240**

OUTPUT PARAMETERS
FOR TRIM WEIGHT
SOFTMAX PROBABILITY
MASS FUNCTION

$\left\{ \begin{array}{c} t_e \\ \bullet \\ \bullet \\ \bullet \\ t_3 \\ t_2 \\ t_1 \end{array} \right.$

**170**

**238′**
ASSEMBLE MODULE 2 TO MODULE 1 USING CLOCK ANGLE, TRIM WEIGHT ANGLE AND TRIM WEIGHT

**236′**
SOFTMAX DISTRIBUTION FOR TRIM WEIGHT T

$$P(T_i) = S(t_i) = \frac{e^{t_i}}{\sum_{j=1}^{j=e} e^{t_j}}$$

CONSTRUCT SOFTMAX PROBABILITY MASS FUNCTION AND SAMPLE TRIM WEIGHT *T* TO APPLY AT THE TRIM WEIGHT ANGLE

**150C**
ARTIFICIAL NEURAL NETWORK

**234′**
- COMPILE DATA SET
- CONVERT TO VECTOR REPRESENTATION
- CONSTRUCT STATE FEATURE VECTOR
- PASS STATE FEATURE VECTOR TO ANN

**232′**
- OUTPUT PARAMETERS FOR CLOCK ANGLE AND TRIM WEIGHT ANGLE PDF(s) AND/OR PMF(s)
- SAMPLE FROM PDF(s) AND/OR PMF(s) TO OBTAIN CLOCK ANGLE AND TRIM WEIGHT ANGLE FOR MODULE-TO-MODULE ASSEMBLY

FIG.15

EP 4 474 616 B1

INPUT TRAINING
DATA SET $E_i$

TRAINING
WORKFLOW
~264

OUTPUT STATE
FOR TRAINING
DATA SET $E_i$

MODEL OUTPUT STATE
IN ROTOR
DYNAMICS MODEL

USE PREDICTED
VIBRATION TO
CALCULATE REWARD
~260

RECORD
REWARD

| d1 <br> d2 <br> · <br> · <br> · <br> dn | | $ANN_1$ <br> $ANN_2$ <br> · <br> · <br> · <br> $ANN_q$ | | d1 <br> d2 <br> · <br> · <br> · <br> dm | | ROTOR <br> DYNAMICS <br> MODEL | | REWARD <br> FUNCTION | | $R_i$ |

$\curvearrowright$262   $\curvearrowright$266

∟268   ∟270   ∟272

### FIG.16A

TRAINING DATA FOR X MANY
TRAINING DATA SETS E

RUN TRAINING
WORKFLOW TO
OBTAIN REWARDS
FOR EACH TRAINING
DATA SET E

USE THE SET OF
REWARDS R TO CALCULATE
THE PERFORMANCE OF
THE ANN's USING A
FUNCTION J

USE AN OPTIMIZATION ALGORITHM,
SUCH AS CMA-ES, TO UPDATE THE
WEIGHTS W OF THE
ARTIFICIAL NEURAL NETWORKS

| $E_1$ <br> $E_2$ <br> · <br> · <br> · <br> $E_x$ | | $R_1$ <br> $R_2$ <br> · <br> · <br> · <br> $R_x$ | | J(R\|W) | | UPDATE ANN WEIGHTS W TO <br> IMPROVE PERFORMANCE |

282⌐   284⌐   286⌐   288⌐

### FIG.16B
∟280

INPUT SUBSET OF TRAINING DATA SET $E_i$ FOR MODULE 1

OBTAIN CLOCK ANGLES USING USAGE WORKFLOW #1 FOR MODULE 1

BALANCE PROCESS SIMULATION FOR MODULE 1

INPUT SUBSET OF TRAINING DATA SET $E_i$ FOR MODULE 2

OBTAIN CLOCK ANGLES USING USAGE WORKFLOW #1 FOR MODULE 2

BALANCE PROCESS SIMULATION FOR MODULE 2

- COMPILE DATA SET
- CONVERT TO VECTOR REPRESENTATION
- CONSTRUCT STATE FEATURE VECTOR
- PASS STATE FEATURE VECTOR TO ANN

ARTIFICIAL NEURAL NETWORK

- OUTPUT PARAMETERS FOR CLOCK ANGLE AND TRIM WEIGHT ANGLE PDF(s) AND/OR PMF(s)
- SAMPLE FROM PDF(s) AND/OR PMF(s) TO OBTAIN CLOCK ANGLE AND TRIM WEIGHT ANGLE FOR MODULE-TO-MODULE ASSEMBLY

OUTPUT PARAMETERS FOR TRIM WEIGHT SOFTMAX PROBABILITY MASS FUNCTION

CONSTRUCT SOFTMAX PROBABILITY MASS FUNCTION AND SAMPLE TRIM WEIGHT $T$ TO APPLY AT THE TRIM WEIGHT ANGLE ALREADY DETERMINED

OUTPUT STATE FOR TRAINING DATA SET $E_i$

d1
d2
•
•
•
dn

SOFTMAX DISTRIBUTION FOR TRIM WEIGHT T

$$P(T_i) = S(t_i) = \frac{e^{t_i}}{\sum_{j=1}^{j=e} e^{t_j}}$$

$\left\{ \begin{array}{c} t_e \\ • \\ • \\ • \\ t_3 \\ t_2 \\ t_1 \end{array} \right.$

ARTIFICIAL NEURAL NETWORK

- COMPILE DATA SET
- CONVERT TO VECTOR REPRESENTATION
- CONSTRUCT STATE FEATURE VECTOR
- PASS STATE FEATURE VECTOR TO ANN

EP 4 474 616 B1

FIG.17

264B

INPUT SUBSET OF TRAINING DATA SET $E_i$ FOR MODULE 1 AND MODULE 2

→

- COMPILE DATA SET
- CONVERT TO VECTOR REPRESENTATION
- CONSTRUCT STATE FEATURE VECTOR
- PASS STATE FEATURE VECTOR TO ANN

→ ARTIFICIAL NEURAL NETWORK →

- OUTPUT PARAMETERS FOR CLOCK ANGLE PDF(s) AND/OR PMF(s)
- SAMPLE FROM PDF(s) AND/OR PMF(s) TO OBTAIN CLOCK ANGLES FOR ASSEMBLING MODULES 1 & 2

→ BALANCE PROCESS SIMULATION FOR MODULE 1 →

→ BALANCE PROCESS SIMULATION FOR MODULE 2 →

- COMPILE DATA SET
- CONVERT TO VECTOR REPRESENTATION
- CONSTRUCT STATE FEATURE VECTOR
- PASS STATE FEATURE VECTOR TO ANN

→ ARTIFICIAL NEURAL NETWORK →

<span style="writing-mode: vertical-rl">EP 4 474 616 B1</span>

OUTPUT PARAMETERS FOR TRIM WEIGHT SOFTMAX PROBABILITY MASS FUNCTION

OUTPUT STATE FOR TRAINING DATA SET $E_i$

d1
d2
•
•
•
dn

←

SOFTMAX DISTRIBUTION FOR TRIM WEIGHT T

$$P(T_i) = S(t_i) = \frac{e^{t_i}}{\sum_{j=1}^{j=e} e^{t_j}}$$

←

$\left\{ \begin{array}{c} t_e \\ \bullet \\ \bullet \\ \bullet \\ \bullet \\ t_3 \\ t_2 \\ t_1 \end{array} \right.$

←

ARTIFICIAL NEURAL NETWORK

←

- COMPILE DATA SET
- CONVERT TO VECTOR REPRESENTATION
- CONSTRUCT STATE FEATURE VECTOR
- PASS STATE FEATURE VECTOR TO ANN

←

- OUTPUT PARAMETERS FOR CLOCK ANGLE AND TRIM WEIGHT ANGLE PDF(s) AND/OR PMF(s)
- SAMPLE FROM PDF(s) AND/OR PMF(s) TO OBTAIN CLOCK ANGLE AND TRIM WEIGHT ANGLE FOR MODULE-TO-MODULE ASSEMBLY

CONSTRUCT SOFTMAX PROBABILITY MASS FUNCTION AND SAMPLE TRIM WEIGHT T TO APPLY AT THE TRIM WEIGHT ANGLE

FIG.18

FIG.19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10343784 B2
- US 2013318018 A1
- DE 102010063812 B4
- US 2021102465 A1

**Non-patent literature cited in the description**

- **MUCINO** ; **V. PAVELIC**. An Exact Condensation Procedure for Chain - Like Structures Using a Finite Element - Transfer Matrix Approach. *Trans. ASME, J. Mech. Design*, 1981, 295-305